(19) Europäisches Patentamt / European Patent Office / Office européen des brevets

(11) **EP 3 328 003 B1**

(12) **EUROPEAN PATENT SPECIFICATION**

(45) Date of publication and mention
of the grant of the patent:
**15.05.2019 Bulletin 2019/20**

(21) Application number: **17756009.1**

(22) Date of filing: **16.01.2017**

(51) Int Cl.:
*H04L 12/42* (2006.01)     *H04L 12/423* (2006.01)
*H04L 12/403* (2006.01)    *H04L 12/43* (2006.01)
*H04L 12/28* (2006.01)     *H04L 12/40* (2006.01)

(86) International application number:
**PCT/JP2017/001170**

(87) International publication number:
**WO 2017/145567 (31.08.2017 Gazette 2017/35)**

(54) **CONTROL NETWORK SYSTEM AND NODE DEVICE THEREIN**

STEUERUNGSNETZWERKSYSTEM UND KNOTENVORRICHTUNG DARIN

SYSTÈME DE RÉSEAU DE COMMANDE ET DISPOSITIF NOEUD DANS CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2016 JP 2016031502**

(43) Date of publication of application:
**30.05.2018 Bulletin 2018/22**

(73) Proprietor: **Fuji Electric Co., Ltd.
Kawasaki-shi, Kanagawa 210-9530 (JP)**

(72) Inventor: **KUBOSUMI, Hajime
Kawasaki-shi,
Kanagawa 210-9530 (JP)**

(74) Representative: **MERH-IP Matias Erny Reichl
Hoffmann
Patentanwälte PartG mbB
Paul-Heyse-Strasse 29
80336 München (DE)**

(56) References cited:
**JP-A- 2016 005 247     US-A1- 2013 128 895**

**Description**

Field

The present invention is related to a control network system in which a plurality of node devices are connected through communication lines and data is exchanged in each prescribed cycle.

Background

In a control network system (transport system for controlling a plant etc.), each device (node) constituting the system needs to exchange a large volume of data with the others while guaranteeing the real-time property. Guaranteeing the real-time property means for example the completion of data exchange within each cyclic term between all devices that need to exchange data. Each device needs to collect pieces of data that indicate the status etc. of itself at the current moment so as to give such data to the other devices for example cyclically.

Employing a transport scheme in which mutual accesses are made as events in response to the occurrence of an access request made by an application provided in each device (node) leads to a situation where the network loads depend upon the application, preventing the securement of the real-time property. Because of this, a transport scheme is employed in which a virtual common memory is provided in each device so that each device transmits data of its own node to all the other nodes in the network in a time-division multiplexed manner (i.e. , at timings that are different from each other) for each communication cycle (scan time), and thereby a data exchange scheme securing the real-time property is realized. While various methods have already been proposed as broadcasting communications methods that are efficient in a network for realizing the above data exchange, one of such examples is the invention of Patent Document 1.

The invention of Patent Document 1 uses both a time-division multiplexed access method based on a timer embedded in each node and embedded timer correction of a slave node performed by a synchronization frame, and thereby realizes highly efficient transport while preventing timings of transmission from the respective nodes from overlapping.

As another example, Patent Document 2 as well discloses a conventional technique that is substantially similar to that of Patent Document 1. FIG. 14 shows a specific example of data exchange using the conventional techniques of Patent Documents 1 and 2 above or other documents.

In this conventional technique, each station (node) is provided with two types of timers; a cycle timer and a send timer. A cycle timer is a timer for generating data exchange cycles (scan time), and the identical time is set across all the stations. In the conventional techniques, synchronizing the cycle timers of all stations by using a synchronization frame is attempted, however this will not be explained particularly.

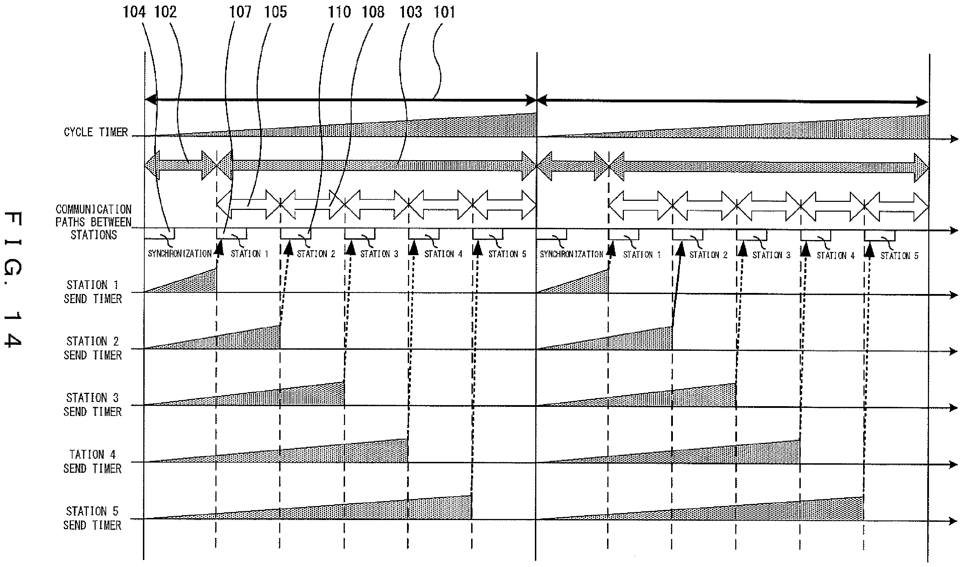

A send timer is a timer for generating a data transmission timing for each station, and values different from each other are set across all the stations. Send timers are activated upon the expiration of cycle timers, and expire at timings in accordance with the above setting values, and thus expire at timings different from each other in all stations. Thereby, data is transmitted from all stations at timings that are different from each other, as illustrated in for example FIG. 14.

The above cycle timers generate a scan time 101, which is a data exchange cycle (communication cycle) as illustrated in the figure. The scan time 101 includes a TC band 102 (illustrated) used for time adjustment and a TS band 103 (illustrated) used for exchanging data. Note that the TC band and the TS band are as described in for example Patent Document 2, and will not be explained herein.

While numerals 105 and 108 denote examples of transmission time slots assigned to the respective stations and numerals 107 and 110 denote examples of a data frame transmitted from each station, these elements will not be explained particularly.

Also, in a transport system for controlling a plant, the above communication cycle (the scan time 101 etc. for example) is, in some cases, divided into a band (such as the above TS band) for performing data communication that guarantees the real-time property, a band (an MSG band etc., which will be explained later) for performing data communications (message communication) in which unidirectional accesses are made as events, the above TC band, etc.

Data communications in which unidirectional accesses are made as events are accompanied by "variations" in the number of the message transmission requests per unit time in a station participating in a network and the total per the same unit time may sometimes exceed the number of the messages that can be transported, and accordingly it is necessary to provide the upper limit on the number of the possible transmissions per unit time and perform communications below that limit. Therefore, the number of the stations that are allowed to perform transmission within a certain unit time is kept under management and a station that has been assigned performs data communications so that data communication is implemented below the upper limit on the number of the transmissions that is possible per unit time.

While various techniques have already been proposed as message communication techniques that realize the above data communication, one of such examples is a token method. In a token method, the master station receives a message transmission request from each station other than the master station (slave station), and grants, in a form of token, a transmission right to some of the stations that made a transmission request. Only a station granted a transmission right is eligible to perform message communications, and a station granted a transmission right transmits a message frame to a network circuit. Granting transmission rights without exceeding the upper limit on the number of the transmissions that is possible per unit time realizes data communications (such as message communications) in which unidirectional accesses are made as events without exceeding the number of the transmissions possible per unit time.

A network transmission system is known from Patent Document 3, wherein a message transmission requesting unit in a slave node adds a message transmission request to shared memory data and transmits resultant data if there is a message to any other node at the time of shared memory data transmission. If a master node gives permission notice in response to the message transmission request, a message transmission processing unit performs message transmission processing in a message band. A permission determination unit in the master node determines whether or not it permits the request in response to the message transmission request. A permission notification unit transmits the permission notice to a node of which the request is permitted.

Further, a frame transmission and communication network is known from Patent Document 4, wherein a communication network interconnects a plurality of synchronized nodes, where regular frames including time-critical data are transmitted periodically or cyclically, and sporadic frames are transmitted non-periodically or occasionally. For example, each node can transmit a regular frame at the beginning of a transmission period common to, and synchronized among, all nodes. Another node then receives regular frames from its first neighboring node, and forwards the frames within the same transmission period and with the shortest delay, to a second neighboring node. Furthermore, each node actively delays transmission of any sporadic frame, whether originating from an application hosted by the node itself or whether received from a neighboring node, until forwarding of all received regular frames is completed.

[Prior Art Documents]

[Patent Documents]

**[0015]**

　　　Patent Document 1: Japanese Laid-open Patent Publication No. 2005-159754
　　　Patent Document 2: International Publication No. 2013/121568
　　　Patent Document 3: Japanese Patent Application JP 2016-005247 A
　　　Patent Document 4: US Patent Application US 2013/128895 A1

Summary

Problem to be solved by the invention

When a full-duplex circuit etc. that uses an Ethernet as transport paths, such as for example 100BASE-TX, 1000BASE-T, etc. and that is of a ring-type or line-type topology is employed for example, each station (node), when performing a communication with a station that is not an adjacent station, performs transport assuming that data will be relayed by at least one station existing between itself and the destination station.

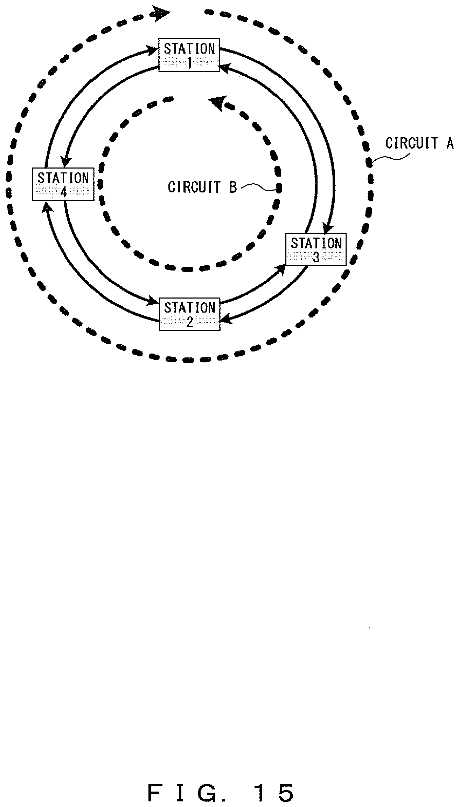

FIG. 15 illustrates a specific example of a control network system using a full-duplex circuit of a ring-type topology. In the illustrated example, four nodes (station 1, station 2, station 3 and station 4) are respectively connected by two lines, the above upstream and downstream communication lines, to form a ring, as illustrated, and it is assumed in the entire network that the clockwise communication route is circuit A and the counter-clockwise communication route is circuit B. In the case of circuit A, transmission data from for example station 1 is sequentially relayed by station 3, station 2 and station 4, and is returned to station 1 as represented by station 1→station 3→station 2→station 4→station 1. In the case of circuit B similarly, transmission data from for example station 1 is sequentially relayed by station 4, station 2 and station 3, and is returned to station 1 as represented by station 1→station 4→station 2→station 3→station 1.

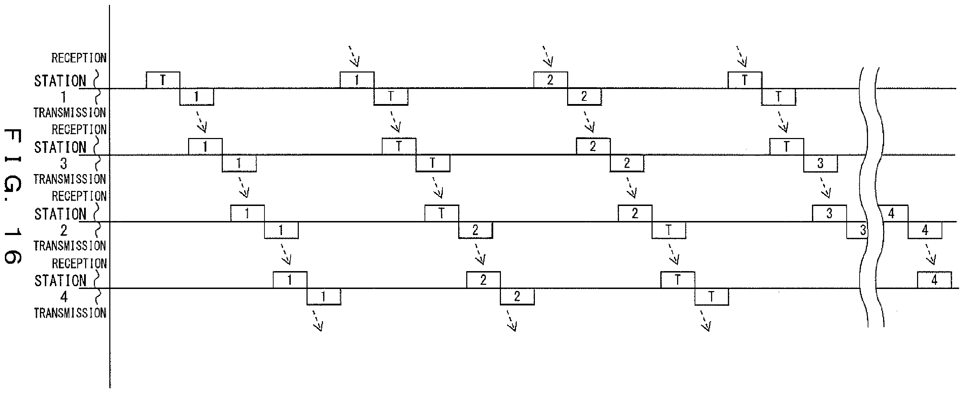

FIG. 16 illustrates an example of operations of a control network system based on a conventional communication scheme in the system of FIG. 15. Note that while FIG. 16 illustrates an operation example of circuit A above, circuit B is substantially similar.

As described above, in the control network system, it is necessary that all stations give their data to all the other stations within each cyclic scan time. FIG. 16 illustrates an operation example of a case when this is realized in a configuration of a ring type topology as illustrated in FIG. 15 for example.

The example of FIG. 16 employs a token method, and a station that has obtained a token (transmission right) is eligible to transmit its data and the other stations relay and receive that data.

In the illustrated example, station 1 first obtains a token and transmits its data to the downstream adjacent station. Station 3 functions as the downstream adjacent station in case of circuit A in the configuration of FIG. 15, and station 4 functions as the upstream adjacent station of station 1. Note in FIG. 16 that rectangles represent transmission-reception data frames (packets), and the upper side and the lower side of each station represent the reception and transmission, respectively. The horizontal axis represents time. The number in each rectangle represents the transmission source station, and "1" for example indicates that the transmission source is station 1 and is referred to as packet "station 1". Station 1 that has obtained the above token will transmit packet "station 1" to station 3. Note that "T" in a rectangle represents a token.

When receiving the above packet "station 1", station 3 obtains it and also relays it to the downstream adjacent station (station 2). Station 2 that has received this packet "station 1" similarly obtains it and also relays it to the downstream adjacent station (station 4). Station 4 that has received this packet "station 1" also obtains it and also relays it to the downstream adjacent station (station 1) similarly.

Thereby, station 1 receives its transmission data frame and thus releases the token. In this example, it is assumed that the token includes a right-granted station information and that the right-granted station is updated upon the release. It is assumed in this example that the right-granted station is updated for each release, as described for example as '1'→'2'→'3'→'4'→'1'→'2'→.

Thereby, when station 2, station 3 and station 4 as well obtain a token so as to obtain a transmission right, they will transmit their data and the data returns to themselves after being sequentially relayed by the other stations.

Thereby, all stations 1 through 4 will transmit their data and all the other stations will receive and obtain that data. This also means that all stations have given their data to all the other stations.

Note that using the conventional techniques of Patent Documents 1 and 2 above makes it possible to cause substantially similar operations as that of the operation example of FIG. 16 without using a token. In other words, in the operation of FIG. 16, each node has, as a result, transmitted its data at a timing different from the others within the TS band. The conventional techniques of Patent Documents 1 and 2 above can realize an operation such as this without using a token and by using send timers that have been set to be different from each other. For example, a send timer of each station can be set in such a manner that each node transmits its data at intervals equivalent to a time, measured in advance, that it takes data to go around the circuit.

Meanwhile, message transmission in a message band is not performed periodically or at all times, and some cases have no messages to transmit and other cases have a plurality of (many) messages to transmit. A station in which a message transmission event of itself has occurred includes a message transmission request in its transmission packet in the above TS band. Also, it in advance determines a station that performs message transmission arbitration (master station) from among a plurality of stations.

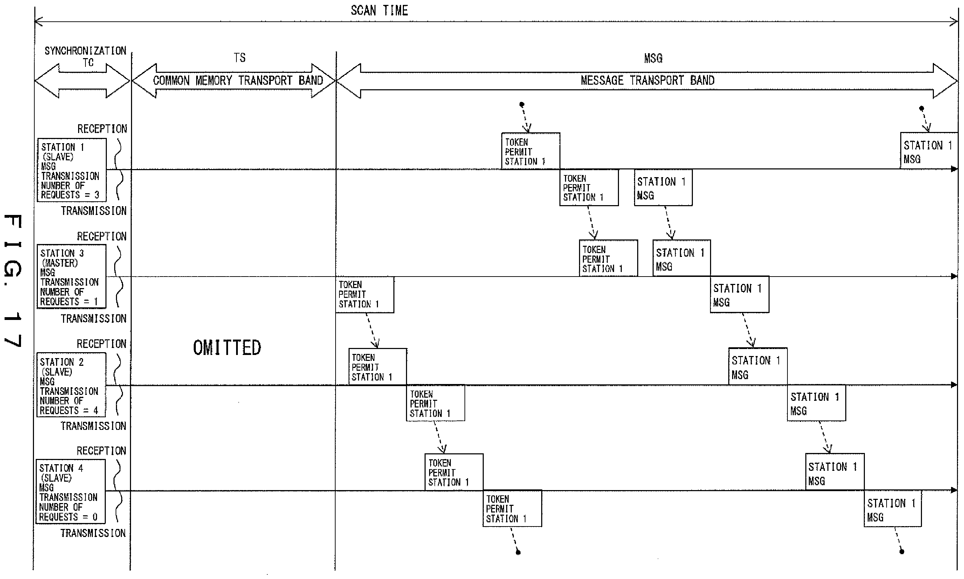

A master station that has received a message transmission request from an arbitrary station in the above TS band determines whether or not to give permission. It is assumed in this example that station 3 is a master station, that there were message transmission requests from station 1 and station 4 during the TS band in the arbitrary scan time 101 and that station 3 gave a permission to station 1. In the case of this example, in the configuration of FIG. 15, a message transmission-reception operation during the MSG band is as illustrated in FIG. 17 for example.

Note that in the example of FIG. 17, one communication cycle (scan time) is divided into the above TC band, the TS band and the message band (MSG band), and because the MSG band is explained in this example, the operations of the TC band and the TS band are omitted. Although it is not illustrated like this, it is assumed that the operation of the TS band is for example the operation of FIG. 16 and that the above message transmission request has been transmitted in a state that it is added to the transmission-reception data frame (packet) illustrated in FIG. 16 as necessary. It is assumed that before the start of the MSG band, the master station can thereby detect stations that made message transmission requests and has determined a station that it will permit to transmit a message (permitted station) from. Note that this determination may be made by using various methods and will not be explained in this example. In the example of FIG. 17, it is assumed that station 1 has been determined to be the permitted station. It is also assumed that the master station is station 3 in the example of FIG. 17.

Further, FIG. 17 omits the operation of the TC band as well and describes information that represents each station (station number and whether it is a master or a slave) in the column of the TC band for convenience. Note that the operation of the TC band is a conventional technique, and will not be explained particularly.

As illustrated in FIG. 17, in the MSG band, the master station (station 3) first outputs a permission report (TOKEN) to the permitted station (station 1). Each station relays, substantially similarly to the case of FIG. 16, this permission report to its downstream adjacent station, and the permission report is delivered to station 1 by being relayed as described as station 3→station 2→station 4→station 1 in the figure. Station 1 relays this permission report to its downstream adjacent station (station 3) and also transmits its message ("station 1 MSG" as illustrated) because it is permitted. Each station relays this message as well to its downstream adjacent station, and the message is delivered to station 4 (in this example the destination is station 4 for example) by being sequentially relayed as described as station 1→station 3→station 2→station 4 in the figure.

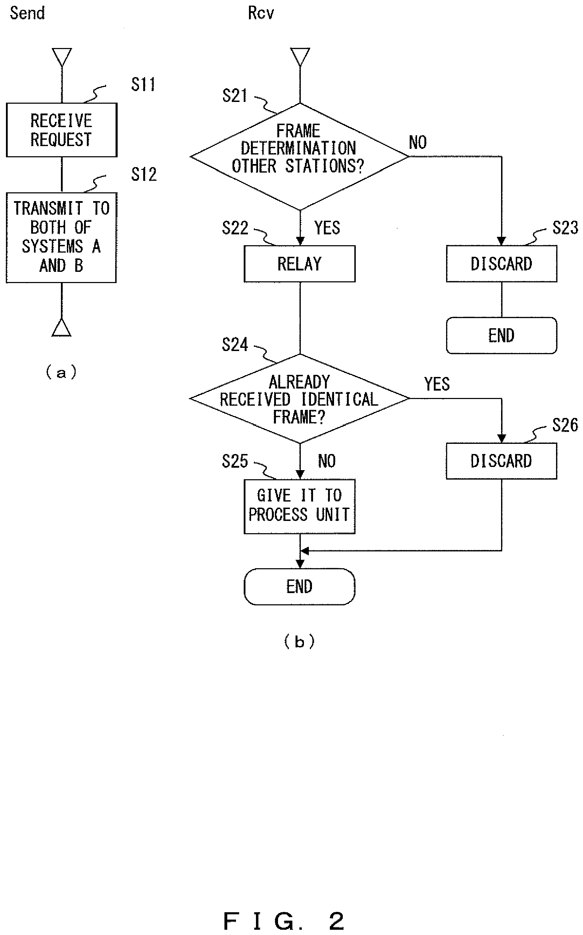

Note that while station 4 further relays this message to station 1 in FIG. 2, this is not always necessary. The length of the MSG band (message transport band) is fixed in advance and cannot be made so long because it is part of the scan time 101 and there may be a case where no messages exist. Because of this, in the above example there still remains a message to transmit for other message transmission request stations, however this may be transmitted in the next communication cycle.

As described above, because time is taken to complete the transmission of one message, when for example the entire system has many message transmission events, a very long time will be taken to complete the transmission of all messages. In a case when for example message transmission events have occurred for 3 messages in station 1, 4 messages in station 2 and 2 messages in station 4, if just one message can be transmitted in one communication cycle, it will take a time resulting from "time of one communication cycle ×9" to complete the transmission of all messages, which is a very long time.

When, alternatively, a permitted station has to transmit many messages, other stations cannot transmit messages before the completion of the transmission and reception of such messages. It is an object of the present invention to provide a control network system, a node device thereof, etc. that can increase transport efficiency of message transmission and reception in a control network system in which all node devices connected to the network exchange data with each other and they also transmit and receive arbitrary messages.

Solving means

The control network system according to the present invention is a control network system in which a plurality of node devices exchange data with each other, and each node device includes the units below.

A data transmission-reception unit configured to transmit data of its device and to receive transmission data of a different device for a prescribed data exchange cycle and within its first communication cycle time band.

A message transmission unit configured to, when there is a message transmission request of its device, transmit a corresponding message to an adjacent station at a prescribed timing within a second communication cycle time band, which is later than the first communication cycle time band, for each prescribed data exchange cycle.

A message reception unit configured to, when receiving a message from one of the adjacent stations, relay the message to the other adjacent station or to, when the message is addressed to its device, obtain the message, within the second communication cycle time band.

Effect of the Invention

The control network system, a node device thereof, etc. of the present invention can increase the transport efficiency of message transmission and reception in a control network system in which all node devices connected to the network exchange data with each other and also transmit and receive arbitrary messages.

Brief Description of the Drawings

FIG. 1(a) and FIG. 1(b) illustrate the entire configuration of a control network system according to the present example;

FIG. 2(a) and FIG. 2(b) are flowcharts of processes of a driver of a node device according to the present example;

FIG. 3 is a flowchart of processes of a process unit of a node according to the present example;

FIG. 4 illustrates a detailed example of the process in step S44;

FIG. 5 illustrates an example of the process in step S63;

FIG. 6 illustrates a frame transmission-reception operation example of each node according to the present example (first);

FIG. 7 illustrates a frame transmission-reception operation example of each node according to the present example (second) ;

FIG. 8 illustrates a frame transmission-reception operation example of each node according to the present example (third);

FIG. 9(a) illustrates the concept of the processes in step S24 and step S26, and FIG. 9(b) illustrates the concept of the processes in step S21 and step S23;

FIG. 10 illustrates another example of a network topology according to the present example;

FIG. 11 is a functional block diagram of a control network system according to the present example;

FIG. 12 illustrates an example of a line-type full duplex circuit;

FIG. 13 illustrates a configuration example of a case of a single circuit;

FIG. 14 illustrates a specific example of data exchange based on a conventional technique of Patent Document 1, 2 or other techniques;

FIG. 15 illustrates a specific example of a control network system based on a full-duplex circuit of a ring-type topology;

FIG. 16 illustrates an example of an operation of a control network system based on a conventional communication scheme in the system of FIG. 15; and

FIG. 17 illustrates an example of a conventional message transmission operation.

Embodiments

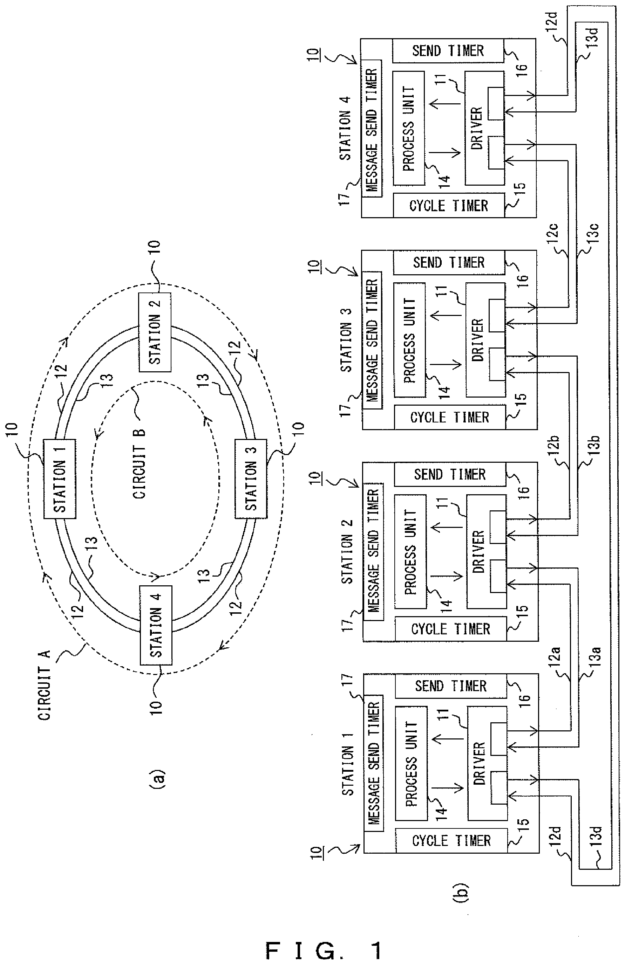

Hereinafter, by referring to the drawings, the embodiments of the present invention will be explained. FIG. 1(a) and FIG. 1(b) are overall configuration diagrams of a control network system of the present example. The control network system of the present example is a full-duplex circuit etc. that uses an Ethernet-based network as transport paths, such as for example 100BASE-TX, 1000BASE-T, etc. above, and is a system configuration employing a ring-type or line-type topology.

In a system configuration such as this, each station (node) performs transport based on an assumption that data is relayed by at least one station existing between itself and the destination in order to perform communications with a station other than an adjacent station. In other words, in the case of this configuration, the only stations that each station can perform communications directly with are adjacent stations. A node, when a piece of frame data transmitted from an adjacent station is not addressed to itself, relays it to the other adjacent station. The repetition of this relay makes the frame data reach the destination station eventually. Note that an adjacent station for a station is a station that is directly connected to that station via a communication line. Also, because the example illustrated in FIG. 1 is a full-duplex circuit, two communication lines, i.e., the upstream and downstream lines, are provided. In other words, a communication line for transmitting data from a station to an adjacent station and a communication line for receiving data transmitted from an adjacent station are provided.

Note that FIG. 1 exemplifies a network system that is a full-duplex circuit etc. and that is of a ring type as a topology, however the configuration of the control network system of the present example is not limited to this example. For example, it may be of a line type instead of being a ring type, and may be of a different type that will be illustrated later. Also, it is not limited to a full-duplex circuit, and may also have for example twice the number of the lines (which will be referred to as full-quadruple circuit) etc., or may also be of a single circuit. Also, while FIG. 1 illustrates an example having four constituent nodes, the scope of the invention is not limited to this example as a matter of course.

Also, as an example, in the control network system of the present example, each device (node) constituting the system has to perform data exchange with the others in the above TS band, and this has to be performed while guaranteeing the real-time property. In order to achieve this, for example data exchange between all nodes has to be completed in a data exchange cycle time that is specified by for example the above cycle timer (within the TS band of one communication cycle) . Specifically, as an example, all nodes have to give their data to all the other nodes within the TS band of each communication cycle. In other words, as an example and as described above, each device (station; node) constituting a system has to perform data exchange with the others while guaranteeing the real-time property. However, the present invention is not limited to the above example.

Meanwhile, message transmission-reception in the above message transport band (MSG band) has to be completed for all messages that occurred at that moment within the MSG band in one communication cycle. However, it is desirable to be able to transmit and receive as many messages as possible in one communication cycle by increasing the transport efficiency. Meanwhile, as described above, because the length of an MSG band is fixed in advance, a situation has to be prevented in which an MSG band finishes before the completion of a message transmission-reception process.

The present technique basically aims to increase the transport efficiency of message transmission and reception in the above message transport band (MSG band), whereas, in addition to this, the transport efficiency of data exchange in the above TS band may be increased.

In the specific example illustrated below, an example is described in which transport efficiency is increased in both the MSG band and the TS band, however the scope of the invention is not limited to this example, and only the transport efficiency of the MSG band may be increased while the TS band is the same as in the conventional technique, as will be described later.

In the control network system of the example illustrated in FIG. 1(a), similarly to FIG. 15 above, four illustrated nodes 10 (station 1 through station 4) are connected by full-duplex communication circuits 12 and 13, and the clockwise communication route is treated as circuit A and the counter-clockwise communication route is treated as circuit B in the entire network. However, the arrangement of station 2 and station 3 has been changed from FIG. 15.

As explained in FIG. 15, the communication circuits 12 and 13 are for example upstream and downstream communication lines, and in for example communications between station 1 and station 2, station 1 transmits data to station 2 via the communication circuit 12 and station 2 transmits data to station 1 via the communication circuit 13.

In further detail, as illustrated in FIG. 1(b), each node 10 has a driver 11, and the communication circuits 12 (12a, 12b, 12c and 12d) related to circuit A above and communication circuits 13 (13a, 13b, 13c and 13d) related to circuit B above are connected to the driver 11 of each node 10 as illustrated.

In this example, each of the communication circuits 12 and 13 is made of a plurality of communication lines (serial lines etc.) instead of a single communication line (serial line etc.). In other words, the communication circuit 12 for example is made of the illustrated communication lines 12a, 12b, 12c and 12d. Each communication line connects two arbitrary nodes 10. In the illustrated example, the communication line 12a connects station 1 and station 2, the communication line 12b connects station 2 and station 3, the communication line 12c connects station 3 and station 4, and the communication line 12d connects station 4 and station 1.

This applies to the communication circuit 13. Specifically, the communication circuit 13 is made of the illustrated communication lines 13a, 13b, 13c and 13d. Each communication line connects two arbitrary nodes 10. In the illustrated example, the communication line 13a connects station 1 and station 2, the communication line 13b connects station 2 and station 3, the communication line 13c connects station 3 and station 4, and the communication line 13d connects station 4 and station 1.

For communications between station 1 and station 2 for example, station 1 transmits a data frame (packet) to station 2 via the communication line 12a, and station 2 transmits a data frame (packet) to station 1 via the communication line 13a. This leads to a configuration where even when station 1 and station 2 transmit packets to each other at the same time, the packets will not collide with each other because they use different communication lines. This is applied to communications between other stations, and even when all stations transmit packets at the same time, the packets will not collide with each other because each station uses a different communication line for transmitting its packet as the entire network system.

Note that packets used herein may either be a packet of data in a TS band (common memory frame) or a packet of a message in an MSG band. In the present example, packet collision will not occur even when each station transmits a packet at the same timing, either in a TS band or an MSG band. Note that the explanations of the TC band will be basically omitted.

Also, each node 10 has, in addition to the driver 11, a process unit 14, a cycle timer 15, a send timer 16, a message send timer 17, etc. The cycle timer 15 is explained in Patent Documents 1 and 2 above, and the explanations thereof will be omitted in this document.

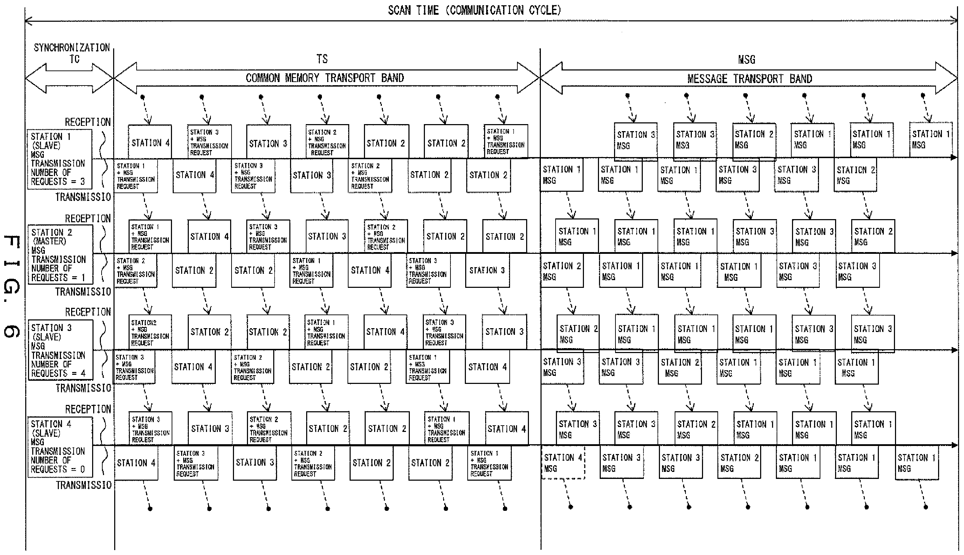

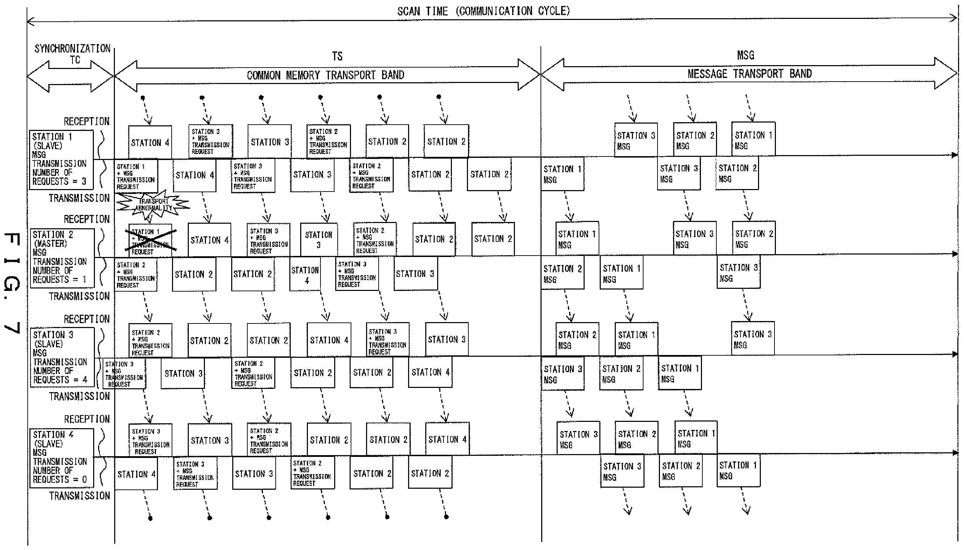

The send timer 16 determines a data transmission timing for its station in a TS band, and is similar to that in Patent Document 1 and 2 above in that sense. However, in Patent Documents 1 and 2, each station has a setting that is different from those of the others, and thus the transmission timing in each station in a TS band is different from those of the others as explained in FIG. 14. By contrast, all stations (nodes 10) for example have the send timers 16 having the same setting, and all stations in a TS band start the transmission of data of their stations (common memory frames) at the same timing. In the examples of FIG. 6, FIG. 7, etc., setting is performed so that the expiration of the send timers 16 is the timing for starting the TS band in all nodes 10.

Note that from the above, the send timers 16 can be referred to as send timers for common memories. The message send timer 17 determines a data transmission timing for its station in an MSG band in each node 10. Note that a conventional message send timer (not illustrated) indicates, by its expiration, the start of an MSG band, and it has been sufficient if the master station had such a timer, and a token was transmitted from the master station upon the expiration of it.

The message send timers 17 are also set to expire at the same timing for all nodes 10. In the examples of FIG. 6, FIG. 7, etc., which will be described later, it is set so that the expiration of the message send timers 17 in all nodes 10 are the start timing of the MSG band. For example, an identical setting value is set for the message send timers 17 of all the nodes 10 and the message send timers 17 are set to be activated upon the expiration of the send timers 16. In addition to this, it is also possible to activate the message send timers 17 by an identical setting value upon the expiration of the cycle timers 15 and to reactivate the send timers 16 in such a manner that they serve as the start timing of the MSG bands as timers for messages.

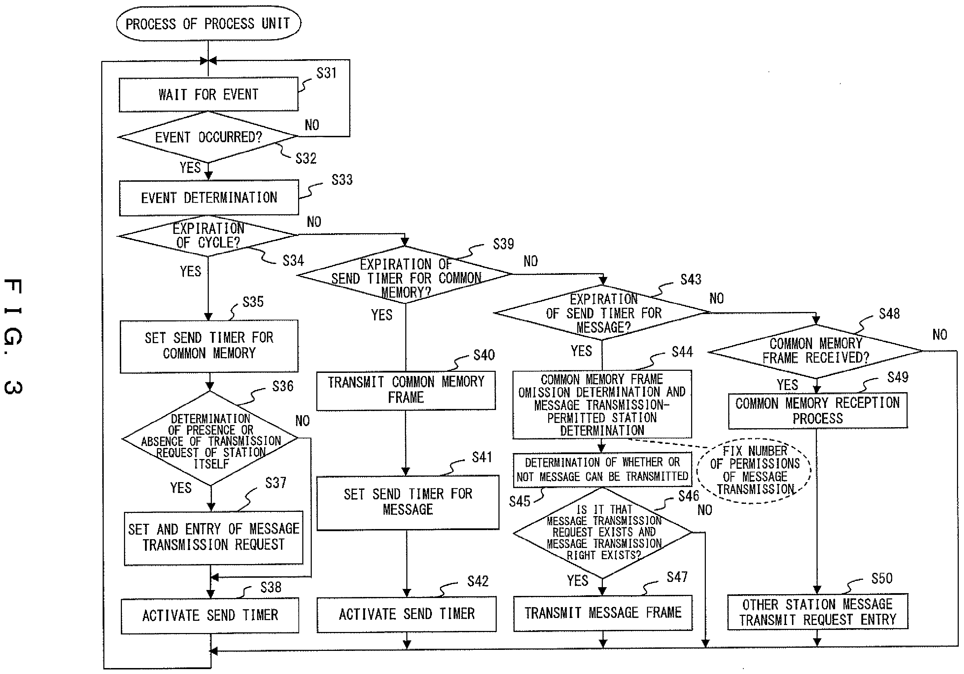

Then, each node 10, when it has a message to transmit, transmits one message of itself at a timing of the expiration of the message send timer 17. Thereafter, on the basis of the process result of FIG. 3, when the station is permitted to transmit a plurality of messages, it transmits the second and subsequent messages. In the example of FIG. 6, which will be explained later, station 1 for example has transmitted three messages of itself. After transmitting as many messages of itself as the number of the permissions (transmission as in FIG. 2(a)), it relays transmission messages from other stations by the process illustrated in FIG. 2(b).

The process unit 14 performs the main process of the node 10, and performs various processes including, among others, for example control of control target devices (not illustrated), collection of pieces of data etc. indicating the state thereof, the management of setting and activation of the cycle timer 15, the send timer 16, the message send timer 17, etc., and the generation of a transmission data frame (packet).

The driver 11 is a process unit (dedicated-to-communication processor etc.) that performs a communication process via the communication lines 12 and 13 including, among others, transmitting the above transmission data frame to a different node in response to a request from the above process unit 14 and, when receiving a transmission data frame from a different node, giving/relaying it to the process unit 14.

For both of the communication circuits 12 and 13, the driver 11, when receiving a packet transmitted from the upstream side, sends it to the downstream side when it has determined that it should relay the packet. In an example of station 1 for example, station 4 is the upstream side and station 2 is the downstream side for circuit A, and station 4 is the downstream side and station 2 is the upstream side for circuit B.

Thereby, the driver 11 of station 1, when receiving a transmission packet (data frame) from station 4 via the communication line 12d, forwards it to station 2 via the communication line 12a when the packet is to be relayed. Note that when relaying a data frame, the contents (data) of the data frame is obtained and is given to the process unit 14 as necessary. Similarly, when receiving a packet from station 2 via the communication line 13a, it is transmitted to station 4 via the communication node line 13d when it is to be relayed. Also, when station 1 transmits its data, the driver 11 of station 1 sends the data frame thereof to both systems of circuits A and B. Specifically, this data frame is transmitted to station 2 via the communication line 12a and is transmitted to station 4 via the communication line 13d.

FIG. 2(a) and FIG. 2(b) are flowcharts representing processes performed by the driver 11 of the node 10. Note that an arithmetic processor (not illustrated) embedded in the driver 11 executes an application program stored in an embedded memory (not illustrated) in advance, and thereby the processes in FIG. 2(a) and FIG. 2(b) are implemented.

FIG. 2(a) illustrates a process performed by the driver 11 upon the data transmission of its station. The above process unit 14 (CPU/MPU etc.) included in the node 10 executes a prescribed software (program) etc. so as to execute a prescribed control process etc. An example of this process is illustrated in FIG. 3, and will be explained later. When an event of transmitting data of its station occurs as one of the processes, it gives that data and a transmission request to the driver 11.

The driver 11, when receiving the above data and a transmission request (step S11), transmits the data and the frame to both systems of circuits A and B above (step S12). In this case, both of them are transmitted to the downstream side as described above. Accordingly, in the case of station 1, it transmits data to station 2 via the communication line 12a for circuit A and it transmits data to station 4 via the communication line 13d for circuit B.

The above data (packet) transmitted from a station returns to itself after going around the network when the data is normal. Also, in some cases, transmission data (packet) of a different station is received. FIG. 2(b) represents a process performed by the driver 11 upon data reception.

When receiving an arbitrary packet via either of circuits A and B above, the driver 11 performs the process of FIG. 2(b). First, it checks the transmission source of the received packet, and when the transmission source is its station (NO in step S21), it discards this packet (step S23). This is because this case is a case where a packet that was transmitted by its station in step S12 above has returned after going around the network.

When the transmission source of the received packet is a different station (other than its station) (YES in step S21), the received packet is relayed (step S22). In other words, the received packet is forwarded to the downstream adjacent station. As a matter of course, when it was received through circuit A, it is relayed to the downstream side in circuit A, and when it was received through circuit B, it is relayed to the downstream side in circuit B. Also, in a case of relaying, the received packet is stored in a buffer (not illustrated) etc. , and is used for performing the processes in step S24 and step S25, which will be explained later.

When the process in step S22 has been performed, it is further determined whether or not this received packet is identical to a packet that has already been received (step S24) . In the present example, the transmission source node transmits packets to both systems of circuits A and B in step S12, and the other stations will receive these two packets in a normal condition. Thus, a packet received later is not necessary. Thereby, when a packet is received that is identical to a packet that has already been received (YES in step S24), the received packet is discarded (step S26).

Note that a transmission source node for example has given an identical frame number to two packets (data frames) that were to be transmitted in step S12 above. Usually, a frame number is assigned for each transmission of a data frame before the transmission. A frame number is updated (incremented by one for example) for each transmission. Thereby, in the process in step S24, when for example a received packet and a packet that has already been received have an identical transmission source node and an identical frame number, they are determined to be identical. However, this is an example, and the scope of the present invention is not limited to the example. Note that an identification ID representing a transmission source node, etc. is added to each packet as a matter of course.

When a received packet is one of the above two packets that was received earlier (NO in step S24), the data of that received packet is given to the process unit 14 (step S25). The process unit 14 performs some processes by using this data. When for example a received packet is a common memory frame, the process for a case when the result of step S48 of FIG. 3, which will be explained later, is YES, will be performed.

Note that a packet in the process of FIG. 2(a) and FIG. 2(b) explained above may be a data packet (common memory frame) that is transmitted and received in the above TS band or may be a packet of a message that is transmitted and received in the above MSG band.

Note that the scope of the invention is not limited to the example of FIG. 2(b), and when for example the transmission source of a received packet is a different station and the first packet has been received, the relay process of this packet may be performed. In other words, even when the transmission source of a received packet is a different station, this packet does not have to be relayed when a packet that is identical to a packet that has already been received was received. Note that in the process of FIG. 2(b), a packet is relayed even in this case.

Note that an identification number (station ID etc.) is assigned to each packet (data frame) as a matter of course. Also, for example, each node 10 has stored network configuration information in advance. In network configuration information, information such as the IDs of the adjacent stations on the upstream and downstream sides of its node is included for each of the nodes 10. Network configuration information is generated by for example a person who develops the system etc. in an arbitrary manner and is stored in each of the nodes 10, however the scope of the invention is not limited to this example.

Also, in the case of the example of FIG. 2(b), when a frame transmitted by itself in step S12 returns after going around the ring-type network, the frame is discarded. However, the scope of the invention is not limited to this example, and the frame may be discarded by a different station that is one previous to the station itself.

Summarizing the processes in FIG. 2 or other processes will result as below for example. A packet, after going around the respective nodes 10 of the ring-type network, i.e., after being received by all the other nodes 10, is discarded. The packet may be discarded by the node 10 that transmitted the packet or by the node 10 (the node 10 that relays the packet to the transmission source node) that is one previous to it.

A transmission source node transmits the above packet to both systems of circuits A and B. Each of the other nodes 10 receives the packet from both systems when there is no abnormality. The driver 11 of each of the other nodes 10 gives (while receiving substantially), to the process unit 14, the packet that it received first, but does not give (does not receive substantially), to the process unit 14, the packet that it received second.

Each of the other nodes may relay the packet that it received second or does not have to relay it. The above packet is a common memory frame or/and a message frame.

FIG. 3 is a flowchart illustrating the process performed by the process unit 14 of the node 10. While the conventional techniques perform a transmission right assignment station determination in a master station for message transmission, in the present example, all nodes 10 respectively perform the process of FIG. 3 and thereby each of them performs the transmission right (the number of the transmission permissions) assignment determination. On the basis of this determination, whether or not the station itself can transmit a message is determined and the assignment number is also determined. As described above, in the present example, transmission rights are not assigned by using a token frame, but each station determines whether or not it can transmit a message, the assignment number, etc. in an active manner. Also, in a case when the station itself can transmit a message, it transmits its message when the message transport band starts, without waiting for a token.

The process of FIG. 3 is performed at arbitrary timings, it is basically in a state of waiting for an arbitrary event (step S31), and each time an event occurs (YES in step S32), the contents of the event that has occurred is determined (step S33), and the process in accordance with the contents is performed.

Specifically, when the event that has occurred is the expiration of the cycle timer 15 (cycle expiration of cycle) (YES in step S34), the processes in step S35 through step S38 are performed.

Specifically, a prescribed setting value is basically set for the send timer 16 (step S35) so as to activate the send timer 16 (step S38), however whether or not there is a message transmission request in the station itself is confirmed before this activation, and when there is (YES in step S36), "set and entry" is performed for the number of the message transmission requests (which will also be referred to as the number of the requests) (step S37). Note that "set" means storing data in a common memory frame, and "entry" means storing data in an "entry table for managing transmission rights" (not illustrated, and will be referred to as an entry table hereinafter).

When a common memory frame to which the above number of the requests has been added is transmitted by the process of step S40, which will be explained later, the above relay process performed by each node 10 causes the common memory frames to be given to all nodes 10, and thereby the number of the message transmission requests is given to all nodes 10. The number of the message transmission requests that has been given is stored in the above "entry table" of each node 10. Then, each of the nodes 10 performs the process of step S44, which will be described later, on the basis of the number of the message transmission requests of each station stored in the above "entry table" of itself. Then, from the above, in the present example, the setting value set for the send timer 16 in step S35 above is identical to the value set for all nodes 10. Note that the conventional techniques set different setting values for the send timers (not illustrated) for all nodes as illustrated in FIG. 14.

By achieving a state in which the techniques of Patent Documents 1 and 2 above cause the cycle timers 15 to expire at the same timing in all the nodes 10, the send timers 16 expire at the same timing in all the nodes 10. Thereby, for example as illustrated in FIG. 6, which will be explained later, all the nodes 10 start transmitting common memory frames at the same timing.

When an event that has occurred is the expiration of the send timer 16 (send expiration) (YES in step S39), the data of the station itself (common memory frame) is transmitted (step S40) . The data of the above station itself (to which a message transmission request is added in some cases) is given to the driver 11. Thereby, as described above, the driver 11 will receive a data-and-transmission request in step S11 above, and this data will be transmitted to both systems of circuits A and B above in step S12 above.

Further, a prescribed setting value is set in a message send timer 17 (step S41) and causes activation (step S42). Note that when an event occurs in which the message send timer 17 expires after this activation, the determination of step S43, which will be described later, becomes YES in some cases. Note that the above setting values are identical in for example all the nodes 10. Thereby, as in the example of FIG. 6, which will be described later, the MSG bands start at the same timing in all the nodes 10, and the node 10 having a message to transmit transmits the first message immediately. This is because a message transmission permission is given for at least one message in this example.

Note that, basically, when an event occurs in which the send timer 16 activated in step S38 above expires, step S39 above becomes YES in some cases. Also, when an event that has occurred is the expiration of the message send timer 17 (send expiration) (YES in step S43), the processes in step S44 through step S47 are performed.

In other words, a common memory frame omission determination and a message transmission permitted station determination are performed (step S44). This process is also a process in which the number of the message transmission permissions is determined for each node 10, and thereby whether or not the station itself can transmit a message and the number of the message transmission permissions of the station itself are determined. Note that while the present example basically gives a permission for at least one message in all message request nodes, the scope of the invention is not limited to this example.

Then, in accordance with the determination result of step S44 above (step S45), in a case when there is a message transmission request of the station itself and the transmission is permitted (YES in step S46), it transmits as many message frames as specified by the number of the message transmission permissions of the station itself (step S47).

When there are not message transmission requests of the station itself from the beginning, when message transmission was not permitted, or in other cases (NO in step S46), messages are not transmitted. Note that at least one message can be transmitted without exception in this example as described above, and thus a case where message transmission is not permitted would not occur, however the scope of the invention is not limited to this example, and a case where a message transmission is not permitted is included.

Also, when an event that has occurred is the reception of a common memory frame (YES in step S48), the data of that common memory frame is stored in a corresponding area of a common memory (not illustrated) (step S49). Note in this example that a frame transmitted in the process of step S40 above will be referred to as a common memory frame. In the process of FIG. 2(b) above, when the driver 11 receives a common memory frame transmitted through an arbitrary different station in the process of step S40 above etc. and the driver 11 has given it to the process unit 14 in step S25 above, the determination in step S48 becomes YES in some cases.

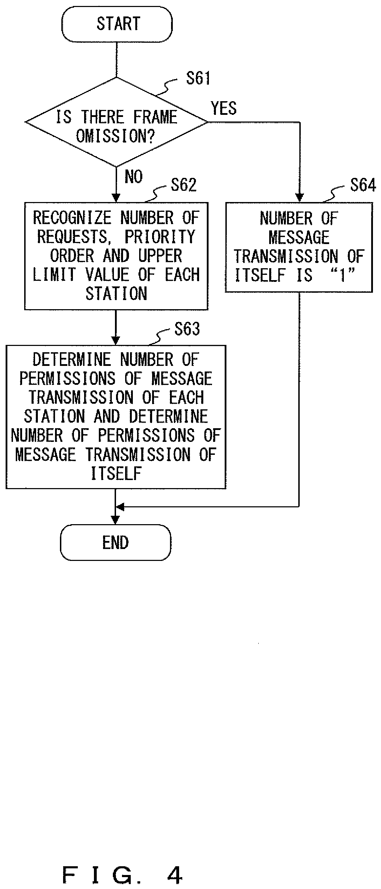

Also, when a received common memory frame includes the number of the message transmission requests stored by the transmission source node 10 thereof in step S37 above, it is considered that there was a message transmission request and the number of the requests is additionally stored in the above "entry table" together with the ID etc. of the transmission source node 10 (step S50). The entry table will later be referred to in the process of step S44 (an example is illustrated in FIG. 4). Note that each frame includes the ID (identification information) etc. of the transmission source node as a matter of course.

Note that, although it is not illustrated, a configuration may be employed in which when a message frame is received, the driver 11 gives the received message to the process unit 14, and the process unit 14 takes in that message frame when it is addressed to itself, and the process unit 14 discards the message frame when it is not addressed to itself. As a mater of course, the driver 11 relays a received message frame to the downstream adjacent station by the process of FIG. 2(b).

As described above, in the present example, each node 10 (each station) that received a common memory frame receives a message transmission request of the transmission source station. In other words, each station receives a message transmission request (number of the requests) from each station (node 10) participating in the network and each station independently determines the transmission permitted station of the message and the assignment number (number of the transmission permissions). Even when each of them performs a determination independently, the same determination result is obtained in response to identical data because they use an identical determination algorithm. In other words, when all common memory frames from the respective stations are transported correctly, identical assignment results (determination results) are obtained for all stations. Each station determines whether or not the station itself can transmit a message and the assignment number on the basis of the message transmission right assignment determination result in the station itself. When a message can be transmitted, all stations transmit message frames at the same time in accordance with the synchronized message send timers 17.

Various methods can be used for determining the above message transmission permitted station and assignment number (number of the transmission permissions), and for example average assignment or priority assignment such as "weighting round-robin" etc. may be performed, a combination thereof may be used, or other arbitrary known methods may be used. In any case, the determination method itself is not limited particularly, and anything will do including any known methods, a combination thereof, etc.

In the present example, through the above processes of FIG. 2 and FIG. 3, a station can immediately start transmission of a common memory frame and a message frame related to the station itself without having to obtain a token in each band. In the configuration and communication scheme as illustrated in FIG. 1, even when each station transmits data at the same time as described above, the frames will not collide with each other. After the completion of the transmission of a data frame of the station itself, the station sequentially relays the frames of different stations. For this as well, even when each station relays and transmits data at the same timing, the frames will not collide with each other.

According to the transmission/relay operations of the present example as described above, a common memory frame and a message frame will also receive the transmission/relay operation as illustrated in FIG. 6 for example. This means that a common memory frame and a message frame as well can be transported more efficiently than by the conventional techniques.

According to this operation, a time for example that it takes one message frame that is transmitted by only one station to go around the circuit after being relayed by each station is equal to a time that it takes messages that are transmitted in such a manner that all stations (or some of the stations) each transmit one message and that the messages go around the circuit after being relayed by each station. Thus, each station can transmit at least one message regardless of the numbers of the message transmission requests of other stations.

In view of this, the present example gives at least one message transmission right for all stations, as will be described later. However, the scope of the invention is not limited to this example. Now, a detailed example of the process of step S44 above is illustrated in FIG. 44.

In the example of FIG. 4, whether or not there is an omission of frames is determined first (step S61). Although this process will be described later, when there is frame omission (YES in step S61), the numbers of the message transmission permissions of all nodes are forcibly set to a basic value ("1" in this example) that is set in advance. Thereby, when there is a message transmission request of the station itself, it will transmit only one message in step S47. Note that even when the number of the message transmission permissions is set to "1" for example, because step S46 is NO if there is not a message transmission request of the station itself, no messages are transmitted.

The reason for setting the numbers of the message transmission permissions of all stations to "1" forcibly and uniformly as described above will be explained later in the explanations of the above frame omission. When there is no frame omission (NO in step S61), whether there are message transmission requests of the station itself and other stations and the number of the requests are first detected on the basis of the number of the requests stored in the entry table in the process of step S37 and step S50 above. Further, the current priority order of each station is detected (step S62). This priority order is determined on the basis of the current counter value of for example a prescribed counter.

While this counter is not illustrated, its value is counted (incremented by one) each time step S34 above becomes YES. Also, this counter cyclically counts between 1 and 4, as in 1→2→3→4→1→2→3→4→1··, in this example. Then, the node 10 whose station number is equal to the counter value is considered as having the highest priority order. When for example the counter value of the counter is "3", station 3 has the highest priority order, and in this example, station 3, station 4, station 1 and station 2 have the priority orders in descending order.

In step S62, the upper limit value that is set in advance is further detected. This upper limit value is the upper limit of the number of the messages that can be transmitted and received in an MSG band, is determined in accordance with the length of the MSG band, the frame size of a message frame, etc., and is determined and set by the person developing the system in advance.

Then, on the basis of whether or not there is a message transmission request of each station, including the station itself, the priority order, the upper limit value, etc., the number of the message transmission permissions of each station is determined and thereby the number of the message transmission permissions of the station itself is determined (step S63). This is determined in such a manner for example that at least the sum of the numbers of the message transmission permissions of all stations will not exceed the above upper limit value.

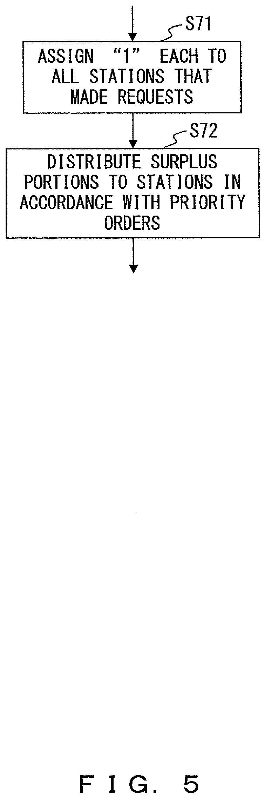

An example of the process of step S63 is illustrated in FIG. 5. In the process of FIG. 5, the number of the message transmission permissions of each station is the sum of the basic value and an arbitrary assignment value from a surplus value. The basic value is for example a value that is assigned to all stations uniformly and without exception, and is "1" in this example (average assignment). In other words, in this example, all stations that made message transmission requests will be able to transmit at least one message, and there does not exist a station that cannot transmit even one message while having a request.

Thereby, the basic value (=1) is first assigned to all stations that made the requests (step S71). Also, the above surplus value is set to satisfy for example surplus value=upper limit value-(basic value ×the number of the stations), etc. Note that when the number of the stations is fixed, a surplus value may be set instead of the upper limit value from the beginning.

The above surplus value is sequentially assigned in accordance with the above priority order starting from the station with the highest priority order (weighting round-robin) (step S72). For example, whether or not "surplus value ≧number of the requests" is satisfied is determined in descending order of the priority order, and when "surplus value ≧number of the requests" is satisfied, setting is conducted so that "assignment number = number of the requests" is satisfied and the surplus value is updated by "surplus value = surplus value - number of the requests". When "surplus value < number of the requests" is satisfied, setting is conducted so that "assignment number = surplus value" is satisfied, and the process is terminated. Then, the number of the message transmission permissions of each station is determined on the basis of "basic value + assignment number".

In this example, explanations will be given by using an example of surplus value = upper limit value - (basic value × number of the stations). It is also assumed that the upper limit value is "7", the basic value is "1", and the number of the stations is four, as illustrated in FIG. 1. Accordingly, the surplus value is "3" in this example. Also, the priority order is in the order of station 3, station 4, station 1 and station 2, starting from the highest in this example. Also, it is for example assumed that station 3, station 1 and station 2 had "2", "3" and "1" as the numbers of requests, respectively. Note that station 4 did not make a request. In the case of this example, in the above process example, station 3 first becomes the target and because "surplus value(=3) ≧ number of the requests(=2)" is satisfied, setting is conducted so that assignment number="2" is satisfied and the surplus value is updated to "1".

Because station 4, which has the second highest priority order, did not make a request, station 1, which has the next highest priority order, becomes a target, and because "surplus value (=1) < number of the requests (=3)" is satisfied, setting is conducted so that assignment number = "1" is satisfied and the present process is terminated. In other words, station 2 has only the basic value. Also, station 1 and station 2 have failed to transmit all the requested messages this time. However, they will be able to transmit the messages at some point next time or later.

As a result of this, station 1 has basic value "1"+assignment number "1"="2", station 2 has basic value "1"+assignment number "0"="1", and station 3 has basic value "1"+assignment number "2"="3", as the numbers of the message transmission permissions for them.

Note that while the process of determining numbers of the message transmission permissions in the above example can be considered as a process based on for example "average assignment + weighting round-robin", the scope of the invention is not limited to the example. As described above, in the above example, in addition to one message having a basic function (the transport time is consistent regardless of whether only one station transmits a message or all stations transmit messages as described above), three message frames can be transported further.

On this assumption, when priorities are given in the order of station 1, station 2, station 3 and station 4, the message transmission as illustrated will be conducted in for example the example illustrated in FIG. 6. This will be explained hereinafter.

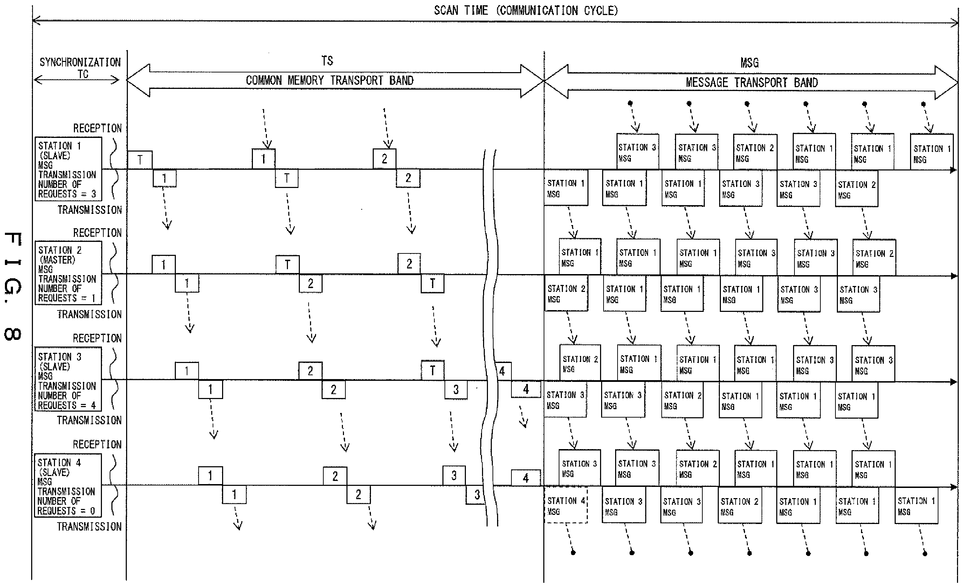

Note in FIG. 6, similarly to FIG. 17, that the operations of the TC band will be omitted and information (station number, whether it is a master or a slave, the number of the requests) representing each station is described in the column of the TC band for the sake of convenience. This applies also to FIG. 7 and FIG. 8. Note that the operation of the TC band is a conventional technique, and will not be explained particularly. Also, in the case of the present example, "master" refers to a master for synchronization etc., and does not refer to a master related to a token (transmission right) . In the present example, no master related to a token (transmission right) exists.

In the example of FIG. 6, the numbers of message requests are "3", "1", "4" and "0" for station 1, station 2, station 3 and station 4, respectively. In other words, station 4 has not made a message transmission request. Then, according to the above priority order, assignment from surplus values is conducted giving the highest priority to station 1.

Specifically, as described above, all message frames can be transmitted because the number of the remaining requests is two for three messages that can be transmitted additionally in the message transport band (surplus value), which is a result of adding one message that can be transmitted unconditionally to the number of the message transmission requests "3" for station 1. Thereby, the remaining number of the messages that can be transmitted additionally (surplus value) is one (=3-2).

Because the message transmission request of station 2 is one, one message is to be transmitted within a scope of one message that can be transmitted unconditionally. Because the message transmission request of station 3 is four, the remaining one message frame, which is a result of adding one message that can be transmitted unconditionally, and the transmission of two message frames in total, are to be permitted.

Note that while only one message that can be transmitted unconditionally can be transmitted in the above process for station 4, which has no message transmission request, station 4 does not transmit messages as a matter of course. Through the process of FIG. 3 described above, the frame transmission-reception operation of each node 10 is as illustrated in FIG. 6 or FIG. 7 for example. Note that FIG. 6 illustrates operations in a normal condition and FIG. 7 illustrates operations in a case when an abnormality has occurred.

First, basically, a common memory frame transport is performed in a common memory transport band (TS band) for which the real-time property needs to be guaranteed, and a message frame transport that makes a unidirectional access as an event is performed by providing a message transport band (MSG band) .

Each station, when it needs to transmit a message, adds the number of the requests to a common memory frame so as to transmit the frame. In the example illustrated in FIG. 6, in the common memory frame transport band (TS band), the nodes 10 (station 1 through station 4) first start transmitting their common memory frames at the same timing, and, when receiving a common memory frame transmitted from a different station, relay the frame to the downstream adjacent station and store the data in a corresponding storage area.

Also, when there is a message transmission event of itself, it adds the number of the requests (number of the message transmission requests) to a common memory frame so as to transmit the frame. Each node 10 that has received this common memory frame determines, on the basis of the fact that a number of the requests is added, that the node 10 that transmitted the frame has made a message transmission request.

In the illustrated example, station 1, station 2 and station 3 have message transmission events and respectively add the numbers of message transmission requests to common memory frames so as to transmit the frames. Note that the numbers of the requests are "3", "1" and "4" for station 1, station 2 and station 3 in the illustrated example.

The common memory frames transmitted from the respective nodes 10 are sequentially relayed by other stations as illustrated by the process illustrated in FIG. 2(b) so as to go around the network, and they thereafter return to the transmission source nodes 10 and are discarded.

When receiving a common memory frame that a different station has transmitted, each node 10 relays it as described above, and obtains that data so as to store it in a common memory. In this process, when the number of the message transmission requests is added, they obtain this as well so as to additionally store it in the above entry table. In the illustrated example, when receiving common memory frames transmitted from station 1, station 2 and station 3, each node 10 obtains the numbers of the message transmission requests added to the frames, and additionally stores the numbers together with the ID of the transmission source nodes etc. in the entry tables (however, they just discard their own transmission frames as described above).

Also, for each node 10, the transmission number of the common memory frames is determined in advance, and in the illustrated example, transmission number="1", transmission number="3", transmission number="2" and transmission number="1" for station 1, station 2, station 3 and station 4, respectively. Then, each node 10 adds the above number of the message transmission requests only to the frame that is transmitted first. For example, station 2 transmits three common memory frames as illustrated in the figure, and the number of the message transmission requests is added only to the first frame.

Note that the number of the transmission of common memory frames for each node 10 is determined by the person who develops the system etc. in advance in such a manner that all common memory frames of all stations are exchanged completely in the TS band (common memory transport band). Also, common memory frames are always exchanged cyclically.

Meanwhile, for messages, a message is transmitted only when a message transmission event has occurred due to some process in the station itself, for each node 10. Further, the number of the messages to be transmitted is not known in advance, but is determined in accordance with some process, as mentioned above. Because of this, the number of the message transmission permissions of each station is adjusted·determined as described above, however the determination process is performed in all nodes 10 (station 1 through station 4) independently as described above.

In other words, instead of making a master node determine a transmission right as in the conventional techniques, the present invention omits a master node at least for determining a transmission right and makes all the nodes 10 determine transmission rights independently so as to transmit as many messages as specified by the number of the determined transmission permissions. For that purpose, an application program dedicated to the determination of transmission rights of an identical algorithm is first stored in all the nodes 10 in advance. Then, during the operation, each node 10 obtains necessary information (the number of the message transmission requests of other stations, the priority order of each station, etc.) each time, and uses the obtained data to execute the above transmission right determination process application program.

As described above, all the nodes 10 have the same determination algorithm, and thus when the above necessary information is the same for all the nodes 10, the same determination results will be obtained in all the nodes 10. Among pieces of the above necessary information, the above priority order of each station is determined on the basis of the counter value of a prescribed counter embedded in each node 10 as described in the above example, and thus it is sufficient to set the same counter value in all the nodes 10 in advance. For example, a configuration is employed in which the counter values are set to "1" for all the nodes 10 and thereafter the values are incremented each time the cycle timer 15 expires for example.

Also, in the example of FIG. 6, because all the nodes 10 can obtain the numbers of the message transmission requests of all the other stations through the exchange of the above common memory frames, necessary information can be obtained. Thereby, identical determination results can be obtained by executing the above transmission right determination process application programs in all the nodes 10. In the example of FIG. 6, the numbers of the message transmission permissions of the nodes 10 as the transmission right determination results are "3", "1" and "2" for station 1, station 2 and station 3, which means that identical results have been obtained in all the nodes 10.

The above transmission right determination process may be performed in an unoccupied area of for example the TS band (common memory transport band) (after the completion of the exchange of common memory frames and before the start of the MSG band) or may be performed immediately after the start of the MSG band (message transport band) as illustrated in FIG. 3 above.

Note that in the case of the latter, the transmission right determination process may be performed in parallel to the first message transmission process. In the present example, the node 10 having a message transmission request may perform message transmission for the first message without waiting for the determination because it is given a transmission permission for at least one message. Thereby, as illustrated in FIG. 6, station 1, station 2 and station 3 have performed message transmission for the first message of themselves immediately after the start of the MSG band. Thereafter, message transmission will be performed as much as arbitrary message assignment from for example the above surplus value. Thereby, in the case of the present example, station 1 for example transmits three messages as illustrated in the figure. Note that station 4 has no message transmission requests in this example, and thus does not transmit messages.

Regardless of whether or not there is a message transmission request, all the nodes 10 relay received messages through the process of FIG. 2 (b) above (except the messages that the station itself transmitted). Thereby, after transmitting as many messages of its own as specified by the number of the transmission permissions that was determined above, each node 10 relays messages transmitted from other stations. In the example of FIG. 6, after for example station 1 has completed the transmission of three messages of its own, it sequentially relays the two messages of station 3 and the one message of station 1 to the downstream adjacent station (station 2).

As described above and similarly to a common memory frame, all messages that have been transmitted can be received by all the nodes 10, and thereby all messages that have been transmitted are delivered to the destination nodes 10. Also, similarly to common memory frames, because all the nodes 10 can transmit messages from the start of the MSG band and can sequentially transmit/relay messages without any limitation or the necessity to obtain a token (without the necessity to obtain a transmission right), messages are transported efficiently and many messages can be delivered to destinations in a short period of time. In the example of FIG. 6, six messages in the entire system are transported. Note that message transport is one-to-one message transmission that is conducted between two nodes; the transmission source and the destination.

Note that while the destination node 10 relays a message even when it receives that message, the scope of the invention is not limited to this example. When the destination node 10 receives a message, the destination node 10 may discard it without relaying it, after obtaining the message.

Next, explanations will be given for the specific example illustrated in FIG. 7. The example of FIG. 6 is an example of a normal case as described above, and can be, in other words, an example where the determination in step S61 of FIG. 4 is NO. Meanwhile, the example of FIG. 7 is an example of an abnormal case as described above, and can be, in other words, an example where the determination of step S61 of FIG. 4 is YES. In other words, it can be treated as a case where frame omission has occurred.

FIG. 7 illustrates an example of a case where transport abnormality etc. has occurred in some or all frames, leading to frame omission in the common memory transport band. When all common memory frames from the respective stations are transported normally, each station performs determination by using an identical transmission right assignment determination algorithm and thereby can obtain identical assignment results. However, when some message transmission requests are lost only in some stations and fail to be received, the transmission right assignment determination results will differ from one station to another.

When each station transmits a message according to the determination result of itself in this state, message transport that is not finished within the message transport band time may be conducted in some cases. In order to prevent this, the present example employs a configuration in which when some or all common memory frames are lost, each station determines this and performs transmission in which only one message frame that can be transmitted unconditionally is transmitted and which will be finished within the message transport band time without fail.

As is obvious from the specific examples illustrated in FIG. 6 and FIG. 7, even when the transport of common memory frames illustrated in FIG. 6 has been completed normally and even when the abnormality illustrated in FIG. 7 has occurred, it is possible to transform more messages than in the cases of the conventional techniques. Alternatively, the length of the message transport band can be reduced, making it possible to reduce the scan time.

According to the present method, in a full-duplex network of a ring-type or line-type topology, many messages can be transmitted in the message transport band, making it possible to increase the volume of transport in the entire network. In addition to this, efficient transport is possible also for common memory frames, making it possible to exchange all common memory frames between all stations in a short period of time.

In the example of FIG. 7, an example is illustrated in which a transmission frame of station 1 (with the number of the message transmission requests) transmitted from station 1 was not received by the adjacent station (station 2) due to some transport abnormality etc. (an example of frame omission). Accordingly, in this example, stations other than station 1 do not have information on whether or not station 1 has a message transmission request or on the number of the requests, resulting in a situation where not all pieces of information necessary for the above transmission right determination process are prepared.

Accordingly, when frame omission such as this has occurred (YES in step S61), the numbers of the transmissions of the stations themselves are forcibly set to "1" in all the nodes 10. Thereby, as illustrated in FIG. 7, each of station 1, station 2 and station 3 having message transmission requests transmits only one message in the MSG band uniformly.

Now, explanations will be given for an example of the determination method of step S61 above. As described above for example, because the number of the transmissions for each station is determined in advance for common memory frames, each node 10 can determine whether or not it has received all transmission frames of all the nodes including itself, and thereby can determine whether or not frame omission has occurred. Note in the present example that because a common memory frame will eventually return to the transmission source node 10 under normal conditions, station 1 can determine that frame omission has occurred, on the basis of the fact that the transmission frame transmitted from itself has not returned in the example of FIG. 7.

This example is not the only example, and when for example a transmission source station adds, to each common memory frame, data indicating the ordinal number of the frame counting among all the frames to be transmitted, it is possible to determine whether or not frame omission has occurred by referring to this data, when the station transmits its common memory frame.

Note that when a received frame is not a common memory frame but is a synchronization frame for example, the process (not illustrated) explained below will be performed. Note that while the present example does not include a master station related to a token, a master station related to the synchronization exists. While station 2 serves as the master station in FIG. 6 and FIG. 7, this is not related to a token but is related to the synchronization.

In other words, the master node may transmit not only the above common memory frame but also a synchronization frame for the synchronization of the cycle timers 15 at a different timing. This transmission is toward an arbitrary destination node. When receiving this synchronization frame, each node 10 other than the destination node relays the frame. When receiving this synchronization frame, the destination node returns a synchronization response frame to the transmission source node (master node) without relaying the frame.

In other words, when an event that has occurred is "reception of synchronization frame addressed to itself" (not illustrated), it gives the above synchronization response frame to the driver 11 and makes the driver transmit the frame to the transmission source node (master node).

Note that one (any one of station 1, station 2, station 3 and station 4) of the plurality of nodes 10 constituting the system is set, in advance, to operate as the master node related to the above synchronization or performs the priority determination in ascending or descending order of the station number or MAC address, etc. so as to operate as the above master node. Basically, all the nodes 10 other than the master node operate as slave nodes. The master node synchronizes the cycle timers 15 of all slave nodes with the cycle timer 15 of itself by using the above synchronization frame etc. This has been described in the conventional documents etc., and will not be explained in more detail in this document.

Also, as an example, the above master node transmits the above synchronization frame to both systems of circuits A and B through the process in step S12 of for example FIG. 2 (a) . Thereby, when receiving a synchronization frame that has arrived earlier, the destination slave node transmits, to both systems of A and B, a synchronization response frame responding to this frame. Then, in the master node, the synchronization response frame that has arrived earlier is given to the process unit 14, and as a result, the frame makes a round trip between the master node and the destination slave node through the shortest route.

Also, the time taken by the round trip of the frame through the shortest route is measured by the master node, and half the measured time is calculated as the communication time (communication delay time) between the master node and the destination slave node. The process of synchronizing the cycle timers 15 by using the communication delay time is a conventional technique and will not be explained particularly.

Note that when an event that has occurred is none of the above described events, a process according to the event that has occurred is performed, however this will not be illustrated·explained particularly. The setting values for send timers are set to be different from each other across all stations in the conventional techniques. By contrast, in the present method, it is assumed as an example that an identical value is set across all the stations (including not only completely identical values but also roughly identical values, i.e., including values that are slightly different). This applies to both of the above two types of send timers 16 and 17.

In other words, in the case of the conventional techniques, the setting value in step S35 is determined for each node through for example the formula below.

```
Setting value = TC band time + (slot unit time ×assignment
slot number of the station itself)
```

The slot unit time is the length of the above transmission time slot (such as 105,108), and is expressed as for example slot unit time = TS band time / the number of the stations . Also, the assignment slot numbers are "0 and natural numbers", and any of 0, 1, 2, ..., N-1 is assigned in such a manner that an identical number will not be assigned to two or more stations.

In the case of the present method, an identical value is set in advance as the setting values for the send timers 16 of all the nodes for example. An example is described below.

$$\texttt{Setting value = TC band time + } \alpha \texttt{ (where } \alpha \texttt{ is 0 or an arbitrary}$$

$$\texttt{positive value)}$$

Note that in the present example, in order to transmit the above data of each station, all the send timers 16 are configured to expire at the same timing for example as described above, and in order to realize this, the send timers 16 of all the nodes 10 are set for example to have an identical value after synchronizing the cycle timers 15, however the scope of the invention is not limited to this example. Note that "at the same time" includes not only cases of completely the same time but also times that are slightly different.

Further, in the present method, not all the send timers 16 have to be configured to expire at the same timing, and it is sufficient if all the nodes 10 transmit their own data at the same timing as a result.

Also, the above "the same timing" may include not only completely the same timing but also timings that are slightly different. Note that while the above transmission of data at the same timing is based on an assumption that the cycle timers 15 of all the nodes are synchronized, this is implemented by the conventional technique of Patent Document 1 or 2 above, and because the synchronization is explained in brief herein, it will not be explained in more detail.

Note that while FIG. 6 and FIG. 7 illustrate the operations on circuit A from among the above two circuits A and B, operations similar to those in circuit A are conducted also in circuit B, although this will not be illustrated particularly. The present method is not limited to the above described examples. For example, a conventional technique may be used for transmitting·relaying common memory frames in the TS band. As an example, the operation of the token method illustrated in FIG. 16 for example may be used. However, it is necessary, for all nodes 10 in which a message transmission event has occurred during the process of the TS band, to transmit the numbers of message transmission requests of themselves to all the other nodes 10. The following processes related to the MSG band may be the above processes in FIG. 3, FIG. 6 and FIG. 7.

An exemplary operations of a variation example such as this is illustrated in FIG. 8. In the operation example illustrated in FIG. 8, operations that are basically similar to those in the conventional technique illustrated in FIG. 16 are performed for the TS band (common memory frame transport band), however a station in which a message transmission event has occurred adds the number of the requests to a common memory frame of itself so as to transmit the frame.

The transmission/relaying operations performed by each node 10 in the MSG band in response to this may be similar to those illustrated in FIG. 6, and will not be explained particularly. In FIG. 6, FIG. 7 and FIG. 8, the rectangles represent transmission-reception data (packets), and the upper sides represent the reception and the lower sides represent the transmission in each station. The horizontal axis represents time. Also, in each rectangle, the station serving as the transmission source is described. When the above send timer 16 expires, each station transmits its data at the same time. For example, station 4 transmits the data of "station 4" in FIG. 6 and FIG. 7. Transmission data is received by the downstream adjacent station after being slightly delayed on the transmission path.

As illustrated in FIG. 6 through FIG. 8, all the nodes 10 perform the message transmission-reception processes with almost no intervals in the MSG band, and thereby it is possible to perform transmission and reception of messages efficiently. Accordingly, it is obvious that the message transmission-reception process can be completed in a shorter time than in the above conventional methods illustrated in FIG. 17 or that the number of messages can be increased in comparison with the case of the conventional methods. In the example of FIG. 6 and FIG. 7, in addition to this effect, common memory frames can also be transformed with almost no intervals in the TS band, making it possible to exchange all common memory frames efficiently. Thereby, it is also possible for example to set a smaller value as setting values for the cycle timers 15 so as to reduce the scan time.

The communication bands between the respective nodes do not enter an unoccupied state, unlike in the conventional techniques, leading to a reduced time necessary for exchanging data to each other between all nodes, making it possible to conduct further data exchange in the remaining band time, and making it possible to increase the amount of data in the network. Also, by using the remaining band time as the next scan time, it is possible to achieve a higher speed of data exchange cycles .

While the explanations have been given herein for the operation of circuit A as described above, packets also similarly go around a ring-type network for circuit B. And, in normal circumstances, each node 10 will receive identical packets from both circuit A and circuit B as described above. And, the packet received later will receive the process in step S26 above and will be discarded.

Also, when for example station 2 transmits three pieces of its data ("station 2" data) in for example the TS band as illustrated in for example FIG. 6 or when for example the driver 11 is provided with a FIFO memory, which will be described later, and a dedicated-to-transmission chip (IC etc.), the driver 11 stores the above three pieces of "station 2" data in the FIFO memory. The dedicated-to-transmission chip sequentially extracts and transmits pieces of data stored in the FIFO memory. First, it extracts the first piece of "station 2" data from among the above three pieces of "station 2" data so as to start the transmission. During this transmission process in the example of FIG. 6, it has started the reception of "station 1" data, and after completing the reception of "station 1" data, it stores that data in the FIFO memory. Thereafter, it further starts the reception of "station 4" data, and after completing the reception of "station 4" data, it stores that data in the FIFO memory.

The dedicated-to-transmission chip sequentially extracts and transmits, in the order of being stored, pieces of data stored in the FIFO memory, and thus sequentially transmits the above three pieces of "station 2" data first as illustrated in FIG. 6 in the above example, next transmits "station 1" data, and thereafter transmits "station 4" data. Note that the transmission of "station 1" data and "station 4" data is a relay (transfer) process. The transmission destination is station 3, which is the downstream adjacent station.

Station 2 further receives two pieces of "station 3" data sequentially, and relays them as well after completing the relay of data that it has already received from other stations. Further, it will sequentially receive the three pieces of data of itself ("station 2" data) as well, however it will discard all of them in step S23 above.

Note that the above example describes an example in which the station discards the data of itself when it receives them, however the scope of the invention is not limited to this example. For example, when a station receives a packet transmitted from its downstream adjacent station, that station may obtain the data of that packet without relaying it (discarding it for example). As a matter of course, it is not necessary for the transmission source to obtain the data of such a packet and it just discards it, as in step S23 above, and thus the process of relaying such a packet is a waste and the above process may be performed so as to avoid such a waste. This leads to the completion of data exchange between all nodes in a further shorter time.

The operations in the other stations are substantially similar to those in station 2 above, and will not be explained. It is assumed as an example that the driver 11 illustrated in FIG. 1(b) has FIFO memories and dedicated-to-transmission chips (not illustrated). A FIFO memory and a dedicated-to-transmission chip (IC etc.) are provided for each of circuit A and circuit B. For example, when at least one arbitrary data frame is in the FIFO memory of circuit A, the dedicated-to-transmission chip of circuit A sequentially transmits them to circuit A. In the case of station 2 for example, it will transmit a data frame to the communication line 12b (i.e., to station 3).

Meanwhile, the main body of the driver 11, in the process of step S12 or step S22, performs a process of storing its data frame or a received data frame in the corresponding FIFO memory. In the example of station 2 in FIG. 6, station 2 first transmits its data consisting of three data frames to both systems of circuit A and circuit B in the process of step S12. Only circuit A is explained now, and the above three "station 2" data frames are sequentially stored in the FIFO memory corresponding to circuit A.

Thereby, the dedicated-to-transmission chip corresponding to circuit A will sequentially transmit the three "station 2" data frames to the communication line 12b. Thereby, as in the example of FIG. 6, station 2 will sequentially transmit three pieces of its data ("station 2" data) to station 3. Then, during this process, as illustrated in the example of FIG. 6, station 2 will receive "station 1" data, "station 4" data, etc. sequentially and sequentially store them in the FIFO memory corresponding to circuit A in the relay process of step S22. Thereby, as in the example of FIG. 6, after the completion of the transmission of the three "station 2" data frames, station 2 will transmit "station 1" data, "station 4" data, etc. sequentially.

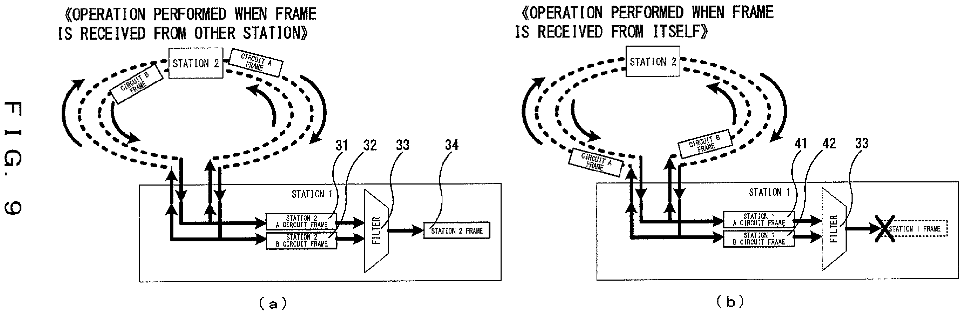

FIG. 9(b) illustrates the outlines of the processes of step S21 and step S23 above, and FIG. 9(a) illustrates the outlines of the processes of step S24 and step S26 above. In this example, explanations are based on an assumption that each node 10 has the function of a filter 33 (illustrated). It is assumed that the filter 33 realizes the processes of step S21 and step S23 above and the processes of step S24 and step S26 above. Also, while only station 1 and station 2 are illustrated, another station may exist (it may be considered that they are not illustrated in the figure). Also, explanations will be given for an operation example related to the packet reception in station 1.

First, as illustrated in FIG. 9(a), when station 2 transmits its data, the data is given to station 1 via circuit A and circuit B. The two packets received by station 1 through both systems are illustrated as a station 2A circuit frame 31 and a station 2B circuit frame 32. The filter 33 gives priority to the earlier one or the later one so as to take in one of the two data frames 31 and 32 as an illustrated station 2 frame 34.

Also, in FIG. 9(b), it is assumed that station 1 transmits its data to both circuit A and circuit B, the pieces of data are relayed by other stations such as station 2 etc. so as to return to station 1 eventually, and the pieces of data that have returned are a station 1A circuit frame 41 and a station 1B circuit frame 42 (illustrated). In such a case, both of the two data frames 41 and 42 are discarded in step S23 above by the filter 33.

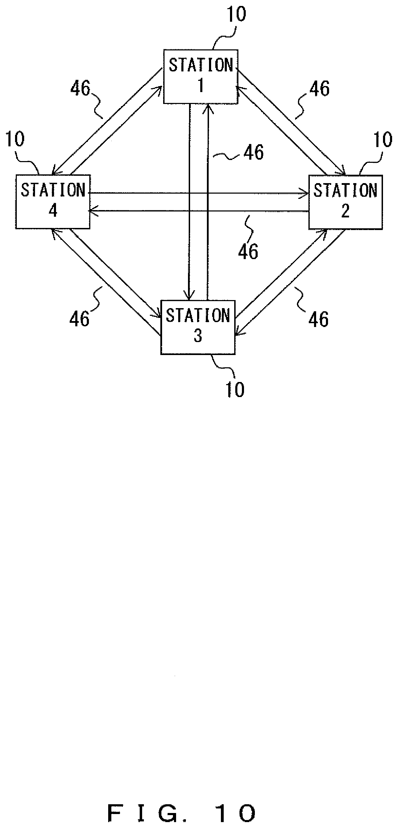

Note that the network topology to which the present method can be applied is not limited to the above example of a ring type or a line type. As an example, it may be a network topology as illustrated in FIG. 10. Note that each communication line 46 that connects arbitrary nodes 10 in FIG. 10 may be considered as being equivalent to the above communication lines 12a, 12b, 12c and 12d or the communication lines 13a, 13b, 13c and 13d. Also, the control network system of the present example is not limited to an Ethernet.

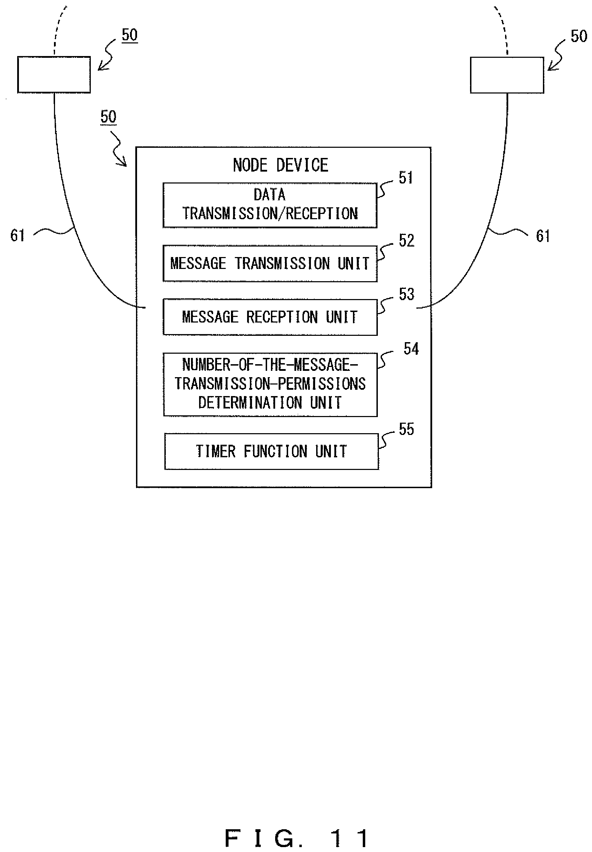

FIG. 11 is a functional block diagram of the control network system of the present example. The control network system of FIG. 11 includes a plurality of node devices 50, and is schematically a network system in which even simultaneous transmission of data from the plurality of node devices 50 does not cause communication interference.

In more detail, the network to which the present method is applied is a network in which for example a plurality of communication lines 61 exist and two arbitrary node devices 50 are connected through a communication line based on a peer-to-peer relationship. Further, it is a full-duplex circuit for example. Specifically, it includes an upstream communication line and a downstream communication line. In other words, it is a network configuration in which even simultaneous transmission of data from the respective node devices 50 does not cause packet collisions. Further, it is also a network in which communications between the node devices 50 that are not directly connected by the communication lines 61 are implemented by the relaying performed by other node devices 50.

Also, in the example illustrated in FIG. 11, each node device 50 has various types of process function units such as a data transmission-reception unit 51, a message transmission unit 52, a message reception unit 53, a message transmission permission number determination unit 54, a timer function unit 55, etc.

The data transmission-reception unit 51 transmits its data in its first band for each prescribed data exchange cycle, and receives/relays transmission data of other devices. When there is a message transmission request of itself, the message transmission unit 52 transmits a corresponding message to an adjacent station for each prescribed data exchange cycle described above and at a prescribed timing in the second band, which is later than the above first band.

When receiving a message from one of the adjacent stations in the above second band, the message reception unit 53 relays that message to the other adjacent station or, when that message is addressed to itself, obtains the message.

The prescribed timing in the above second band for example is when that second band starts. Each node device 50 can transmit a message immediately when the second band starts, i.e., without having to obtain a transmission right, unlike in the conventional techniques.

Also, for example, all the node devices 50 have the same timing as the prescribed timing in the above second band. Also, the above "the same timing" may include not only completely the same timing but also timings that are slightly different. In other words, "the same" may also include a case of "roughly the same" . In order to generate a prescribed timing in the above second band, at least one timer function is used as an example. In the above specific example, a prescribed timing in the above second band is generated by using the cycle timer 15, the send timer 16 and the message send timer 17. A case is explained in which the node device 50 includes the timers 15, 16 and 17 as an example, however the scope of the invention is not limited to this example. Also, these timers 15, 16 and 17 may be considered as specific examples of the timer function unit 55, which will be explained later.

Also, for example, all the node devices 50 have the same timing as the prescribed timing in the above second band. Alternatively, the prescribed timing in the above second band is for example when the second band starts. Also, a prescribed timing of a first band, which will be described later, may also be generated by using the above at least one timer function.

In this specific example, by for example setting the same setting values for the send timers 16 and the message send timers 17 of all the node devices 50, the prescribed timings in the above first band are made identical and the prescribed timings in the second band are made identical for all the node devices 50, however the scope of the invention is not limited to this example. Also, for example the cycle timers 15 have to be synchronized for all the node devices 50 as a precondition, however the scope of the invention is not limited to this example. The synchronization method is a conventional technique as described above. The cycle timers 15 generate data exchange cycles (communication cycles).

Note that the specific example of the above second band is the above message transport band (MSG band) and the specific example of the above first band is the above common memory transport band (TS band). Also, for example the above data transmission-reception unit 51, when its message transmission request exists, adds the number of the requests to that data of itself so as to transmit the data, and, when the number of the requests of the above different device has been added to the transmission data of that different device, stores that number of the requests. As a matter of course, the above number of the requests of itself is stored as well.

Then, by for example the above message transmission permission number determination unit 54 determining the number of the message transmission permissions of each node device on the basis of the above stored number of the requests and a prescribed value that is set in advance, the number of the message transmission permissions of itself is determined.

Then, the above message transmission unit 52, when a message transmission request of itself exists, transmits as many messages as specified by the above number of the message transmission permissions of itself. Also, for example the above message transmission permission number determination unit 54 determines the number of the message transmission permissions of each node device on the basis of the above stored number of the requests, the above prescribed value that is stored in advance, and the current priority order of that node device.

Also, the above prescribed value for example includes an upper limit value, which is the number of the messages that the entire system can transmit within the above second band. Then, on the basis of the above stored number of the requests and the upper limit value, the above message transmission permission number determination unit 54 determines the above number of the message transmission permissions in such a manner that the total of the above number of the message transmission permissions based on all node devices does not exceed the upper limit value.

Alternatively, the above message transmission permission number determination unit 54, on the basis of the above stored number of the requests and the above upper limit value, determines the above number of the message transmission permissions by performing assignment preferentially to a node device having a high priority order while keeping the total of the above numbers of the message transmission permissions based on all the node devices below the upper limit value.

Also, for example the above message transmission permission number determination unit 54 assigns a basic value of the above number of the message transmission permissions to each of the node devices and distributes the surplus value to each node device in accordance with the above priority order, the surplus value being obtained by subtracting the total of the basic values from the upper limit value, so as to make it possible for all the node devices to transmit at least one message, and thereby determines the number of the message transmission permissions of each node device.

Also, it is assumed that for example the above message transmission permission number determination unit 54 uses the same algorithm for all the node devices. This makes it possible to obtain the same process results (the above number of the message transmission permissions of each node device) for the same data that is used for the processes as described above.

Also, the above stored number of the requests for example includes the number of the requests of the station itself. The number of the message transmission permissions of each node device including the number of the requests of itself is determined. According to the present configuration, even the transmission of the above messages from the above respective node devices 50 at the same timing will not cause collisions between messages.

Each node device 50 above is connected to one of the adjacent stations of itself in a one-to-one manner via the first communication line and is also connected to the other of the adjacent stations of itself in a one-to-one manner via the second communication line, and the above message reception unit receives a message from the above one of the adjacent stations via the above first communication line and relays the message to the other of the adjacent stations via the above second communication line.

The communication line 61 illustrated in FIG. 11 is equivalent to the above first and second communication lines. Also, for example the above data transmission-reception unit 51 transmits its data above to the above adjacent station at a prescribed timing in the above first band, and, when receiving transmission data from the above one of the adjacent stations, obtains that transmission data and also relays it to the other adjacent station above.

Also, for example, a prescribed timing in the above first band is when that first band starts. Alternatively, for example, all the above node devices 50 have the same timing as the prescribed timing in the above first band.

For example, each of the above node devices 50 has a timer function unit 55 (has at least one timer), and generates a prescribed timing in the above second band by using that timer function unit 55. Alternatively, a prescribed timing in the above first band is generated by using that timer function unit 55.

Also, for example, the transmission data of the above all node devices 50 is received by all the other node devices 50 by being repeatedly relayed in the above first band of the above data exchange cycle, and thereby the mutual data exchange between all the node devices 50 is completed.

Also, for example, a message transmitted from the above message transmission unit 52 of each node device 50 is received by all the other node devices 50 by being repeatedly relayed in the above second band of the above data exchange cycle, and thereby all the messages are received by their node devices 50 as their destination.

Also, for example, the above control network system includes the above plurality of node devices 50 and communication lines 61, and the communication lines 61 connect arbitrary two node devices 50. Then, each node device 50 can communicate with the above adjacent stations, which are other node devices 50 connected via the above communication lines 61. Communications between the node devices 50 that are not connected via communication lines are realized by the relaying performed by at least one of the other node devices 50.

Also, for example, all data that each node device 50 transmitted through the data transmission-reception unit 51 will be received·obtained by all the other node devices 50 in the data exchange cycle by being relayed by the relaying function of the other node devices 50, and thereby the mutual data exchange between all the node devices is completed. Note that "reception·obtainment" means reception and obtainment, however the scope of the invention is not limited to this example. Also, "/" means "or".

Also, the above communication line 61 is for example a full-duplex circuit. Also, for example, the control network system of FIG. 11 is a ring-type or line-type network, however the scope of the invention is not limited to this example.

Alternatively, for example, the control network system of FIG. 11 is a network in which the above respective node devices are connected through full-duplex circuits on the basis of a ring-type or line-type topology. Also, for example, the data transmission-reception unit 51 and the message transmission unit 52 transmit their data to both systems of such a full duplex configuration.

Also, for example, each node device 50, when the transmission source of received data is itself, discards that received data without relaying it. Alternatively, for example, each node device 50, when the transmission source of the received data is the downstream adjacent station, discards the received data without relaying it.

For example, respective pieces of transmission data of all node devices 50 are received by all the other node devices 50 by being repeatedly relayed in the above data exchange cycle, and the data exchange between all the node devices is completed.

Also, the node device 50 is provided with an arithmetic processor (not illustrated) such as a CPU/MPU etc. and a storage unit (not illustrate) such as a memory etc. The storage unit stores a prescribed application program in advance . By the arithmetic processor executing this application program, the processes in the flowcharts of FIG. 2(a), FIG. 2(b), FIG. 3, FIG. 4 and FIG. 5 and the processes of the various types of the process function units of FIG. 11 are implemented.

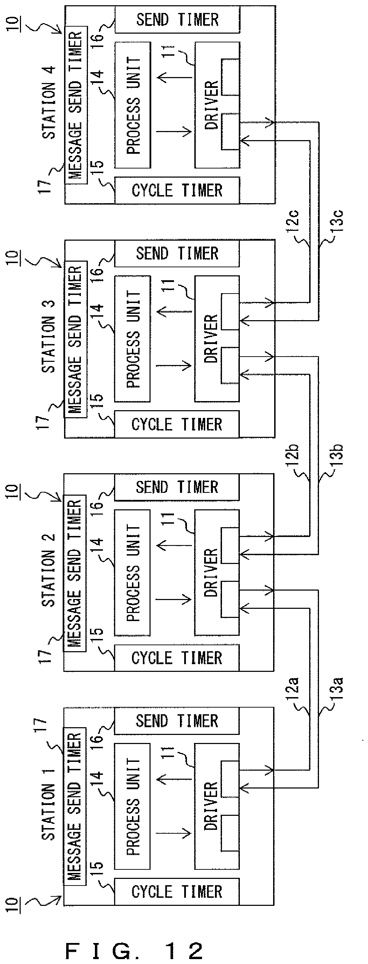

FIG. 1 illustrates an example of a ring-type full-duplex circuit. FIG. 12 illustrates an example of a line-type full-duplex circuit. The configuration of FIG. 12 may be considered as a configuration resulting from omitting the communication line 12d and the communication line 13d from FIG. 1(b). In the case of a line-type such as this, the transmission data of each node 10 does not return to the station from which it was transmitted, and when it reaches the nodes 10 at both ends (station 1 and station 4 in this example), the relaying is terminated.

As described above, in the present method, all the nodes 10 constituting the network simultaneously transmit their data to the adjacent nodes on both sides by using timers that are synchronized with the timer of the master node by using for example the node synchronization method of Patent Document 2 etc. After the completion of the transmission of their data, all the nodes 10 each relay frame data that they received from one of the adjacent nodes of itself to the other adjacent node. This frame data is a message frame and a common memory frame.

Also, in the example of FIG. 6 or other figures of the present example, a message frame and a common memory frame may be transmitted without having to obtain a transmission right in a corresponding band (MSG band, TS band), and the transmission can be started for example at the same time (at the time when a band starts) . After the transmission of frame data of itself, a station relays transmission data that it received from other stations.

As described above, the bands of a full-duplex circuit are used simultaneously between constituent nodes so as to increase the transport efficiency, making it possible to increase the amount of transported information in the entire network and to achieve a higher speed for a data exchange cycle. This makes it possible to increase the amount of data in the network and achieve a higher speed of a data exchange cycle in for example a network system of a full-duplex circuit of a ring-type topology or a line-type topology.

Also, messages are not transmitted at all times, but are transmitted when a transmission request for a message is made. When a transmission request is made, the corresponding node adds the number of the requests to a common memory frame and transmits the frame. This makes it possible for all the nodes to detect all the numbers of the requests through the common memory frame exchange processes between node devices in the above TS band. Thereby, each node determines a number of the message transmission permissions of each station through the same determination algorithm on the basis of the numbers of the requests of itself and other stations. When there is no abnormality, all the node devices will obtain the same determination results. Thereby, each station, on the basis of the number of the transmission permissions of itself, transmits its message frame in the MSG band. This makes it possible to complete the transmission and reception of all messages within the MSG band and to transmit as many messages as possible . Also, it is not necessary to obtain a transmission right from the master each time, and all stations can transmit their message frames immediately upon the start of an MSG band, making it possible to transmit messages efficiently.

Note that the present method is not limited to the above examples. For example, the application target is not limited to a network of the above full-duplex circuit of a ring-type or line-type topology. As described above, the topology is not limited to a ring type or a line type. Further, the circuit is not limited to a full-duplex circuit, and may be of a multi circuit (such as a quadruple circuit) or may be of a single circuit.

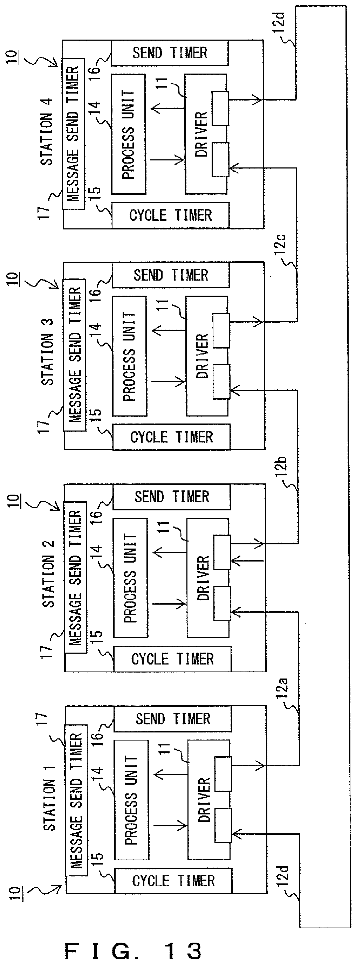

In the case of a single circuit, the configuration has only one of the communication lines 12 and 13 of circuit A and circuit B illustrated in FIG. 1 for example. For example, it only has the communication line 12. An example of a configuration such as this is illustrated in FIG. 13.

Also, while the configuration is changed to a configuration of a single circuit after preparing for example the double circuit illustrated in FIG. 1 first in order to synchronize the cycle timers 15 and the operation is performed by using the single circuit in the case of a single circuit, the scope of the invention is not limited to this example. As another example, a configuration may be possible in which by providing for example radio-controlled clocks to all the nodes 10 and by each node 10 adjusting its cycle timer 15 to the time specified by the radio-controlled clock of itself, the cycle timers 15 are synchronized for all the nodes as a result.

Also, in the case of a single circuit (assumed to be circuit A only in this example), the process of each node 10 is substantially and basically similar to the processes in FIG. 2(a), FIG. 2(b), FIG. 3, FIG. 4 and FIG. 5, however it is partially different. Specifically, the process of step S12 above is a process in which data is transmitted only to circuit A. Also, two packets are not received from both systems in a reception process, and thus the processes in step S24 and step S26 are omitted.

According to the control network system of the present invention, its nodes 10, etc. one or more messages can be transmitted and received in a shorter time than in the conventional techniques. In a situation where a plurality of (many) messages have to be transmitted in the entire system particularly, remarkable effects are achieved.

According to the present method, the transport efficiency is first increased for message transmission, 'and the realization of a greater amount of transported data in the entire network is made possible. This means that the realization of a greater amount of transported data is made possible while securing the completion of the transmission and reception of messages in a determined MSG band without fail. Further, even when abnormality occurs in data transport including a message request, the transport efficiency is increased and the realization of a greater amount of transported data in the entire network is made possible while securing the completion of the transmission and reception of messages in a determined MSG band without causing a problem and without fail.

Further, when exchanging not only messages but also data between all the nodes 10 (common memory data; control frame etc.), the exchange of data can be completed in a shorter time than in the conventional techniques. Accordingly, because a high speed can be achieved for a data refresh cycle (periodic) in a control system using the control network of the present invention, a higher speed can be achieved for the control. Further, improved production efficiency is also expected for customer systems.

Note that the present invention is not limited to the ring-type configuration of FIG. 1 above or to the line-type configuration of FIG. 12 above. As a matter of course, while it is necessary to use a ring-type or line-type configuration for message communications, it is not always necessary to use a ring-type or line-type configuration for common memory data exchanges, and for example a bus-type configuration as described in Patent Document 1 or 2 may be used. Thereby, a bus-type network is further constructed in for example the configuration of FIG. 1 so as to exchange common memory data in a TS band through the bus, although it is not illustrated. The configurations and operations of the nodes 10 for this communication may be similar to those in for example Patent Document 1 or 2, and transmission operations illustrated in FIG. 14 for example may be performed.

Note that in this document, "/" represents "or" except in numerical expressions etc. Also, for example, "or/and" means "or" or "and".

Numerals

10 NODE
11 DRIVER
12, 13 COMMUNICATION CIRCUIT
12A, 12B, 12C, 12D COMMUNICATION LINE
13A, 13B, 13C, 13D COMMUNICATION LINE
14 PROCESS UNIT
15 CYCLE TIMER
16 SEND TIMER
17 MESSAGE SEND TIMER
31 STATION 2A CIRCUIT FRAME
32 STATION 2B CIRCUIT FRAME
33 FILTER
41 STATION 1A CIRCUIT FRAME
42 STATION 1B CIRCUIT FRAME
46 COMMUNICATION LINE
50 NODE DEVICE
51 DATA TRANSMISSION-RECEPTION UNIT
52 MESSAGE TRANSMISSION UNIT
53 MESSAGE RECEPTION UNIT
54 MESSAGE TRANSMISSION PERMISSION NUMBER DETERMINATION UNIT
55 TIMER FUNCTION UNIT

## Claims

1. A control network system in which a plurality of node devices (50) exchange data with each other, each of the plurality of node devices (50) includes:

a data transmission-reception unit (51) configured to transmit data of its device and to receive transmission data of a different device for a prescribed data exchange cycle and within its first communication cycle time band; **characterized by**

a message transmission unit (52) configured to, when there is a message transmission request of its device, transmit, a number of corresponding messages to an adjacent station at a prescribed timing within a second communication cycle time band, which is later than the first communication cycle time band, for the each prescribed data exchange cycle, the number being equal to or smaller than a number of permissions of message transmission assigned to its device; and

a message reception unit (53) configured to, when receiving a message from one of the adjacent stations, relay the message to the other adjacent station or to, when the message is addressed to its device, obtain the message, within the second communication cycle time band.

2. The control network system according to claim 1, wherein
a prescribed timing within the second communication cycle time band is when the second communication cycle time band starts.

3. The control network system according to claim 2, wherein
a prescribed timing within the second communication cycle time band is identical for all the node devices.

4. The control network system according to one of claims 1 through 3, wherein
the data transmission-reception unit (51) is configured to, when there is a message transmission request of its device, add a number of the requests to the data of its device so as to transmit the data and to, when the number of the requests of the different device is added to transmission data of the different device, store the number of the requests,

each of the node devices (50) further includes a message transmission permission number determination unit (54) configured to determine a number of message transmission permissions of each node device on the basis of the stored number of the requests and a prescribed value that is set in advance, and thereby to determine a number of message transmission permissions of its device, and

the message transmission unit (52) is configured to, when there is a message transmission request of its device, transmit as many messages as specified by the number of the message transmission permissions of its device.

5. The control network system according to claim 4, wherein
the message transmission permission number determination unit (54) is configured to determine a number of the message transmission permissions of each of the node devices on the basis of the stored number of the requests, the prescribed value that is set in advance and a current priority order of each of the node devices.

6. The control network system according to claim 4, wherein
the prescribed value is an upper limit value that is a number of messages that can be transmitted by the entire system within the second communication cycle time band, and

the message transmission permission number determination unit (54) is configured to determine the number of the message transmission permissions on the basis of the stored number of the requests and the upper limit value in such a manner that a total of the numbers of the message transmission permissions for all the node devices does not exceed the upper limit value.

7. The control network system according to claim 5, wherein
the prescribed value is an upper limit value that is a number of messages that can be transmitted by the entire system within the second communication cycle time band, and

the message transmission permission number determination unit (54) is configured to determine the number of the message transmission permissions by performing assignment preferentially to a node device the priority order of which is high while keeping a total of the numbers of the message transmission permissions for all the node devices below the upper limit value on the basis of the stored number of the requests and the upper limit value.

8. The control network system according to claim 7, wherein
the message transmission permission number determination unit (54) is configured to assign a basic value of the number of the message transmission permissions to each of the node devices and to distribute surplus values to the respective node devices in accordance with the priority orders, the surplus values being obtained by subtracting a total of the basic values from the upper limit value so as to make it possible for all the node devices to transmit at least one message, and thereby to determine the number of the message transmission permissions of each node device.

9. The control network system according to claim 1, wherein
the data transmission-reception unit (51) is configured to transmit the data of its device to the adjacent station at a prescribed timing within the first communication cycle time band, and to, when receiving transmission data from the one of the adjacent stations, obtain the transmission data and to relay the data to the other adjacent station.

10. The control network system according to one of claims 1 through 3, wherein
each of the node devices (50)
further includes at least one timer unit (55), and
is configured to generate a prescribed timing within the second communication cycle time band by using the at least one timer unit.

11. The control network system according to one of claims 1 through 3, wherein
pieces of transmission data of all of the node devices (50) are respectively and repeatedly relayed so as to be received by all the other node devices and thereby data exchange with each other is completed between all the node devices within the first communication cycle time band in the data exchange cycle, and
messages transmitted by the message transmission units (52) of the respective node devices (50) are respectively and repeatedly relayed so as to be received by all the other node devices and thereby all messages are received by their destination node devices within the second communication cycle time band in the data exchange cycle.

12. A node device (50) in a control network system in which a plurality of node devices (50) exchange data with each other, the node device comprising:

a data transmission-reception unit (51) configured to transmit data of its device and to receive/relay transmission data of a different device for a prescribed data exchange cycle and within its first communication cycle time band; **characterized by**
a message transmission unit (52) configured to, when there is a message transmission request of its device, transmit a number of corresponding messages to an adjacent station at a prescribed timing within a second communication cycle time band, which is later than the first communication cycle time band, for the each prescribed data exchange cycle, the number being equal to or smaller than a number of permissions of message transmission assigned to its device; and
a message reception unit (53) configured to, when receiving a message from one of the adjacent stations, relay the message to the other adjacent station or to, when the message is addressed to its device, obtain the message, within the second communication cycle time band.

13. The node device according to claim 12, wherein
a prescribed timing within the second communication cycle time band is when the second communication cycle time band starts.

14. The node device according to claim 13, wherein
a prescribed timing within the second communication cycle time band is identical for all the node devices.

15. The node device according to one of claims 12 through 14, wherein
the data transmission-reception unit (51) is configured to, when there is a message transmission request of its device, add a number of the requests to the data of its device so as to transmit the data and to, when the number of the requests of the different device is added to transmission data of the different device, store the number of the requests,
a message transmission permission number determination unit (54) configured to determine a number of message transmission permissions of each node device on the basis of the stored number of the requests and a prescribed value that is set in advance, and thereby to determine a number of message transmission permissions of its device is further included, and
the message transmission unit (52) is configured to, when there is a message transmission request of its device, transmit as many messages as specified by the number of the message transmission permissions of its device.

16. The node device according to claim 15, wherein
the message transmission permission number determination unit (54) is configured to determine a number of the message transmission permissions of each of the node devices on the basis of the stored number of the requests, the prescribed value that is set in advance and a current priority order of each of the node devices.

17. The node device according to claim 15, wherein
the prescribed value is an upper limit value that is a number of messages that can be transmitted by the entire system within the second communication cycle time band, and
the message transmission permission number determination unit (54) is configured to determine the number of the message transmission permissions on the basis of the stored number of the requests and the upper limit value in such a manner that a total of the numbers of the message transmission permissions for all the node devices does not exceed the upper limit value.

18. The node device according to claim 16, wherein
the prescribed value is an upper limit value that is a number of messages that can be transmitted by the entire system within the second communication cycle time band, and
the message transmission permission number determination unit (54) is configured to determine the number of the message transmission permissions by performing assignment preferentially to a node device the priority order of which is high while keeping a total of the numbers of the message transmission permissions for all the node devices below the upper limit value on the basis of the stored number of the requests and the upper limit value.

**Patentansprüche**

1. Steuerungsnetzwerksystem, in welchem eine Mehrzahl von Knotenvorrichtungen (50) miteinander Daten austauschen,
jede der Mehrzahl von Knotenvorrichtungen (50) umfassend:

eine Datensende-Empfangseinheit (51), die dazu ausgestaltet ist, Daten von ihrer Vorrichtung zu senden und Sendungsdaten von einer anderen Vorrichtung für einen vorgegebenen Datenaustauschzyklus und innerhalb ihres ersten Kommunikationszyklus-Zeitbands zu empfangen;
**gekennzeichnet durch**
eine Nachrichtensendeeinheit (52), die dazu ausgestaltet ist, wenn es eine Nachrichtensendeanfrage ihrer Vorrichtung gibt, eine Anzahl von entsprechenden Nachrichten an eine angrenzende Station zu einem vorgegebenen Zeitpunkt innerhalb eines zweiten Kommunikationszyklus-Zeitbands zu senden, welches später ist als das erste Kommunikationszyklus-Zeitband, für den jeweils vorgegebenen Datenaustauschzyklus, wobei die Anzahl gleich oder kleiner als eine Anzahl von Genehmigungen für eine Nachrichtensendung ist, die ihrer Vorrichtung zugeordnet ist; und
eine Nachrichtenempfangseinheit (53), die dazu ausgestaltet ist, wenn sie eine Nachricht von einer der angrenzenden Stationen empfängt, die Nachricht an die andere angrenzende Station weiterzuleiten, oder, wenn die Nachricht an ihre Vorrichtung adressiert ist, die Nachricht zu erhalten, innerhalb des zweiten Kommunikationszyklus-Zeitbands.

2. Steuerungsnetzwerksystem nach Anspruch 1, wobei
ein vorgegebener Zeitpunkt innerhalb des zweiten Kommunikationszyklus-Zeitbands ist, wenn das zweite Kommunikationszyklus-Zeitband beginnt.

3. Steuerungsnetzwerksystem nach Anspruch 2, wobei
ein vorgegebener Zeitpunkt innerhalb des zweiten Kommunikationszyklus-Zeitbands gleich für alle der Knotenvorrichtungen ist.

4. Steuerungsnetzwerksystem nach einem der Ansprüche 1 bis 3, wobei
die Datensende-Empfangseinheit (51) dazu ausgestaltet ist, wenn es eine Nachrichtensendeanfrage ihrer Vorrichtung gibt, eine Anzahl der Anfragen zu den Daten ihrer Vorrichtung hinzuzufügen, so dass die Daten gesendet werden, und wenn die Anzahl der Anfragen der anderen Vorrichtung zu den Sendungsdaten der anderen Vorrichtung hinzugefügt sind, die Anzahl der Anfragen zu speichern,
jede der Knotenvorrichtungen (50) ferner eine Bestimmungseinheit für eine Nachrichtensendegenehmigungsanzahl (54) umfasst, die dazu ausgestaltet ist, eine Anzahl von Nachrichtensendegenehmigungen einer jeden Knotenvorrichtung auf Basis der gespeicherten Anzahl der Anfragen und eines vorgegebenen Werts zu bestimmen, der im Voraus eingestellt wird, und somit eine Anzahl von Nachrichtensendegenehmigungen ihrer Vorrichtung zu bestimmen, und

die Nachrichtensendeeinheit (52) dazu ausgestaltet ist, wenn es eine Nachrichtensendeanfrage ihrer Vorrichtung gibt, so viele Nachrichten wie durch die Anzahl der Nachrichtensendegenehmigungen ihrer Vorrichtung festgelegt zu senden.

5. Steuerungsnetzwerksystem nach Anspruch 4, wobei
die Bestimmungseinheit für eine Nachrichtensendegenehmigungsanzahl (54) dazu ausgestaltet ist, eine Anzahl von Nachrichtensendegenehmigungen einer jeden der Knotenvorrichtungen auf Basis der gespeicherten Anzahl der Anfragen, des vorgegebenen Werts, der im Voraus eingestellt wird, und einer aktuellen Prioritätsreihenfolge einer jeden der Knotenvorrichtungen zu bestimmen.

6. Steuerungsnetzwerksystem nach Anspruch 4, wobei
der vorgegebene Wert ein oberer Grenzwert ist, der eine Anzahl von Nachrichten ist, die von dem gesamten System innerhalb des zweiten Kommunikationszyklus-Zeitbands gesendet werden können, und
die Bestimmungseinheit für eine Nachrichtensendegenehmigungsanzahl (54) dazu ausgestaltet ist, die Anzahl der Nachrichtensendegenehmigungen auf Basis der gespeicherten Anzahl der Anfragen und des oberen Grenzwerts auf solche Weise zu bestimmen, dass eine Summe der Anzahlen der Nachrichtensendegenehmigungen für alle Knotenvorrichtungen den oberen Grenzwert nicht überschreitet.

7. Steuerungsnetzwerksystem nach Anspruch 5, wobei
der vorgegebene Wert ein oberer Grenzwert ist, der eine Anzahl von Nachrichten ist, die von dem gesamten System innerhalb des zweiten Kommunikationszyklus-Zeitbands gesendet werden können, und
die Bestimmungseinheit für eine Nachrichtensendegenehmigungsanzahl (54) dazu ausgestaltet ist, die Anzahl der Nachrichtensendegenehmigungen durch Durchführung einer Zuordnung bevorzugt zu einer Knotenvorrichtung, deren Prioritätsreihenfolge hoch ist, zu bestimmen, während eine Summe der Anzahlen der Nachrichtensendegenehmigungen für alle Knotenvorrichtungen unter dem oberen Grenzwert auf Basis der gespeicherten Anzahl der Anfragen und des oberen Grenzwerts gehalten wird.

8. Steuerungsnetzwerksystem nach Anspruch 7, wobei
die Bestimmungseinheit für eine Nachrichtensendegenehmigungsanzahl (54) dazu ausgestaltet ist, einen Grundwert der Anzahl der Nachrichtensendegenehmigungen jeder der Knotenvorrichtungen zuzuordnen und Überschusswerte an die entsprechenden Knotenvorrichtungen gemäß den Prioritätsreihenfolgen zu verteilen, wobei die Überschusswerte durch Subtrahieren einer Summe der Grundwerte von dem oberen Grenzwert erhalten werden, so dass ermöglicht wird, dass alle Knotenvorrichtungen wenigstens eine Nachricht senden, und somit die Anzahl der Nachrichtensendegenehmigungen einer jeden Knotenvorrichtung bestimmt wird.

9. Steuerungsnetzwerksystem nach Anspruch 1, wobei
die Datensende-Empfangseinheit (51) dazu ausgestaltet ist, die Daten ihrer Vorrichtung an die angrenzende Station zu einem vorgegebenen Zeitpunkt innerhalb des ersten Kommunikationszyklus-Zeitbands zu senden, und wenn die Sendungsdaten von der einen der angrenzenden Stationen empfangen werden, die Sendungsdaten zu erhalten und die Daten an die andere angrenzende Station weiterzuleiten.

10. Steuerungsnetzwerksystem nach einem der Ansprüche 1 bis 3, wobei
jede der Knotenvorrichtung (50)
ferner wenigstens eine Zeitgebereinheit (55) umfasst, und
dazu ausgestaltet ist, einen vorgegebenen Zeitpunkt innerhalb des zweiten Kommunikationszyklus-Zeitbands durch Verwenden der wenigstens einen Zeitgebereinheit zu erzeugen.

11. Steuerungsnetzwerksystem nach einem der Ansprüche 1 bis 3, wobei
Teile der Sendungsdaten aller Knotenvorrichtungen (50) entsprechend und wiederholt weitergeleitet werden, so dass sie von all den anderen Knotenvorrichtungen empfangen werden und dadurch ein Datenaustausch miteinander zwischen allen Knotenvorrichtungen innerhalb des ersten Kommunikationszyklus-Zeitbands in dem Datenaustauschzyklus fertiggestellt wird, und
Nachrichten, die von den Nachrichtensendeeinheiten (52) der entsprechenden Knotenvorrichtungen (50) gesendet werden, entsprechend und wiederholt weitergeleitet werden, so dass sie von all den anderen Knotenvorrichtungen empfangen werden und dadurch alle Nachrichten von ihren Zielknotenvorrichtungen innerhalb des zweiten Kommunikationszyklus-Zeitbands in dem Datenaustauschzyklus empfangen werden.

12. Knotenvorrichtung (50) in einem Steuerungsnetzwerksystem, in welchem eine Mehrzahl von Knotenvorrichtungen (50) miteinander Daten austauschen, die Knotenvorrichtung umfassend:

eine Datensende-Empfangseinheit (51), die dazu ausgestaltet ist, Daten von ihrer Vorrichtung zu senden und Sendungsdaten von einer anderen Vorrichtung für einen vorgegebenen Datenaustauschzyklus und innerhalb ihres ersten Kommunikationszyklus-Zeitbands zu empfangen/weiterzuleiten;

**gekennzeichnet durch**

eine Nachrichtensendeinheit (52), die dazu ausgestaltet ist, wenn es eine Nachrichtensendeanfrage ihrer Vorrichtung gibt, eine Anzahl von entsprechenden Nachrichten an eine angrenzende Station zu einem vorgegebenen Zeitpunkt innerhalb eines zweiten Kommunikationszyklus-Zeitbands zu senden, welches später ist als das erste Kommunikationszyklus-Zeitband, für den jeweils vorgegebenen Datenaustauschzyklus, wobei die Anzahl gleich oder kleiner als eine Anzahl von Genehmigungen für eine Nachrichtensendung ist, die ihrer Vorrichtung zugeordnet ist; und

eine Nachrichtenempfangseinheit (53), die dazu ausgestaltet ist, wenn sie eine Nachricht von einer der angrenzenden Stationen empfängt, die Nachricht an die andere angrenzende Station weiterzuleiten, oder, wenn die Nachricht an ihre Vorrichtung adressiert ist, die Nachricht zu erhalten, innerhalb des zweiten Kommunikationszyklus-Zeitbands.

13. Knotenvorrichtung nach Anspruch 12, wobei
ein vorgegebener Zeitpunkt innerhalb des zweiten Kommunikationszyklus-Zeitbands ist, wenn das zweite Kommunikationszyklus-Zeitband beginnt.

14. Knotenvorrichtung nach Anspruch 13, wobei
ein vorgegebener Zeitpunkt innerhalb des zweiten Kommunikationszyklus-Zeitbands gleich für alle der Knotenvorrichtungen ist.

15. Knotenvorrichtung nach einem der Ansprüche 12 bis 14, wobei
die Datensende-Empfangseinheit (51) dazu ausgestaltet ist, wenn es eine Nachrichtensendeanfrage ihrer Vorrichtung gibt, eine Anzahl der Anfragen zu den Daten ihrer Vorrichtung hinzuzufügen, so dass die Daten gesendet werden, und wenn die Anzahl der Anfragen der anderen Vorrichtung zu den Sendungsdaten der anderen Vorrichtung hinzugefügt sind, die Anzahl der Anfragen zu speichern,
eine Bestimmungseinheit für eine Nachrichtensendegenehmigungsanzahl (54), die dazu ausgestaltet ist, eine Anzahl von Nachrichtensendegenehmigungen einer jeden Knotenvorrichtung auf Basis der gespeicherten Anzahl der Anfragen und eines vorgegebenen Werts zu bestimmen, der im Voraus eingestellt wird, und somit eine Anzahl von Nachrichtensendegenehmigungen ihrer Vorrichtung zu bestimmen, ferner umfasst ist, und
die Nachrichtensendeeinheit (52) dazu ausgestaltet ist, wenn es eine Nachrichtensendeanfrage ihrer Vorrichtung gibt, so viele Nachrichten wie durch die Anzahl der Nachrichtensendegenehmigungen ihrer Vorrichtung festgelegt zu senden.

16. Knotenvorrichtung nach Anspruch 15, wobei
die Bestimmungseinheit für eine Nachrichtensendegenehmigungsanzahl (54) dazu ausgestaltet ist, eine Anzahl der Nachrichtensendegenehmigungen einer jeden der Knotenvorrichtungen auf Basis der gespeicherten Anzahl der Anfragen, des vorgegebenen Werts, der im Voraus eingestellt wird, und einer aktuellen Prioritätsreihenfolge einer jeden der Knotenvorrichtungen zu bestimmen.

17. Knotenvorrichtung nach Anspruch 15, wobei
der vorgegebene Wert ein oberer Grenzwert ist, der eine Anzahl von Nachrichten ist, die von dem gesamten System innerhalb des zweiten Kommunikationszyklus-Zeitbands gesendet werden können, und
die Bestimmungseinheit für eine Nachrichtensendegenehmigungsanzahl (54) dazu ausgestaltet ist, die Anzahl der Nachrichtensendegenehmigungen auf Basis der gespeicherten Anzahl der Anfragen und des oberen Grenzwerts auf solche Weise zu bestimmen, dass eine Summe der Anzahlen der Nachrichtensendegenehmigungen für alle Knotenvorrichtungen den oberen Grenzwert nicht überschreitet.

18. Knotenvorrichtung nach Anspruch 16, wobei
der vorgegebene Wert ein oberer Grenzwert ist, der eine Anzahl von Nachrichten ist, die von dem gesamten System innerhalb des zweiten Kommunikationszyklus-Zeitbands gesendet werden können, und
die Bestimmungseinheit für eine Nachrichtensendegenehmigungsanzahl (54) dazu ausgestaltet ist, die Anzahl der Nachrichtensendegenehmigungen durch Durchführung einer Zuordnung bevorzugt zu einer Knotenvorrichtung, deren Prioritätsreihenfolge hoch ist, zu bestimmen, während eine Summe der Anzahlen der Nachrichtensendegenehmigungen für alle Knotenvorrichtungen unter dem oberen Grenzwert auf Basis der gespeicherten Anzahl der Anfragen und des oberen Grenzwerts gehalten wird.

**Revendications**

1. Système de réseau de commande dans lequel une pluralité de dispositifs de noeud (50) échangent des données les uns avec les autres,
chacun de la pluralité de dispositifs de noeud (50) comprenant :

   une unité d'émission-réception de données (51) configurée pour émettre des données de son dispositif et pour recevoir des données d'émission d'un dispositif différent pendant un cycle d'échange de données prescrit et dans sa première bande de temps de cycle de communication ; **caractérisé par**
   une unité d'émission de message (52) configurée pour, lorsqu'il existe une requête d'émission de message de son dispositif, émettre un nombre de messages correspondants à une station adjacente à une temporisation prescrite dans une seconde bande de temps de cycle de communication, qui est ultérieure à la première bande de temps de cycle de communication, pendant chacun des cycles d'échange de données prescrits, le nombre étant égal ou inférieur à un nombre d'autorisations d'émission de message affecté à son dispositif ; et
   une unité de réception de message (53) configurée pour, lors de la réception d'un message à partir de l'une des stations adjacentes, relayer le message à l'autre station adjacente ou pour, lorsque le message est adressé à son dispositif, obtenir le message, dans la seconde bande de temps de cycle de communication.

2. Système de réseau de commande selon la revendication 1, dans lequel
une temporisation prescrite dans la seconde bande de temps de cycle de communication correspond au moment où la seconde bande de temps de cycle de communication démarre.

3. Système de réseau de commande selon la revendication 2, dans lequel
une temporisation prescrite dans la seconde bande de temps de cycle de communication est identique pour l'ensemble des dispositifs de noeud.

4. Système de réseau de commande selon l'une des revendications 1 à 3, dans lequel
l'unité d'émission-réception de données (51) est configurée pour, lorsqu'il existe une requête d'émission de message de son dispositif, ajouter un nombre des requêtes aux données de son dispositif de façon à émettre les données et pour, lorsque le nombre des requêtes du dispositif différent est ajouté à des données d'émission du dispositif différent, stocker le nombre des requêtes,
chacun des dispositifs de noeud (50) comprend en outre une unité de détermination de nombre d'autorisations d'émission de message (54) configurée pour déterminer un nombre d'autorisations d'émission de message de chaque dispositif de noeud sur la base du nombre stocké des requêtes et d'une valeur prescrite qui est définie à l'avance, et ainsi pour déterminer un nombre d'autorisations d'émission de message de son dispositif, et
l'unité d'émission de message (52) est configurée pour, lorsqu'il existe une requête d'émission de message de son dispositif, émettre autant de messages que le spécifie le nombre des autorisations d'émission de message de son dispositif.

5. Système de réseau de commande selon la revendication 4, dans lequel
l'unité de détermination de nombre d'autorisations d'émission de message (54) est configurée pour déterminer un nombre des autorisations d'émission de message de chacun des dispositifs de noeud sur la base du nombre stocké des requêtes, de la valeur prescrite qui est définie à l'avance et d'un ordre de priorité courant de chacun des dispositifs de noeud.

6. Système de réseau de commande selon la revendication 4, dans lequel
la valeur prescrite est une valeur de limite supérieure qui est un nombre de messages qui peuvent être émis par le système entier dans la seconde bande de temps de cycle de communication, et
l'unité de détermination de nombre d'autorisations d'émission de message (54) est configurée pour déterminer le nombre des autorisations d'émission de message sur la base du nombre stocké des requêtes et de la valeur de limite supérieure d'une manière telle qu'un total des nombres des autorisations d'émission de message pour l'ensemble des dispositifs de noeud ne dépasse pas la valeur de limite supérieure.

7. Système de réseau de commande selon la revendication 5, dans lequel

la valeur prescrite est une valeur de limite supérieure qui est un nombre de messages qui peuvent être émis par le système entier dans la seconde bande de temps de cycle de communication, et

l'unité de détermination de nombre d'autorisations d'émission de message (54) est configurée pour déterminer le nombre des autorisations d'émission de message en réalisant une affectation de manière préférentielle à un dispositif de noeud dont l'ordre de priorité est élevé tout en gardant un total des nombres des autorisations d'émission de message pour l'ensemble des dispositifs de noeud au-dessous de la valeur de limite supérieure sur la base du nombre stocké des requêtes et de la valeur de limite supérieure.

**8.** Système de réseau de commande selon la revendication 7, dans lequel
l'unité de détermination de nombre d'autorisations d'émission de message (54) est configurée pour affecter une valeur de base du nombre des autorisations d'émission de message à chacun des dispositifs de noeud et pour distribuer des excédents de valeur aux dispositifs de noeud respectifs conformément aux ordres de priorité, les excédents de valeur étant obtenus en soustrayant un total des valeurs de base à la valeur de limite supérieure de façon à permettre à l'ensemble des dispositifs de noeud d'émettre au moins un message, et ainsi pour déterminer le nombre des autorisations d'émission de message de chaque dispositif de noeud.

**9.** Système de réseau de commande selon la revendication 1, dans lequel
l'unité d'émission-réception de données (51) est configurée pour émettre les données de son dispositif à la station adjacente à une temporisation prescrite dans la première bande de temps de cycle de communication, et pour, lors de la réception de données d'émission à partir de l'une des stations adjacentes, obtenir les données d'émission et pour relayer les données à l'autre station adjacente.

**10.** Système de réseau de commande selon l'une des revendications 1 à 3, dans lequel
chacun des dispositifs de noeud (50)
comprend en outre au moins une unité de temporisateur (55), et
est configuré pour générer une temporisation prescrite dans la seconde bande de temps de cycle de communication par utilisation de l'au moins une unité de temporisateur.

**11.** Système de réseau de commande selon l'une des revendications 1 à 3, dans lequel
des éléments de données d'émission de l'ensemble des dispositifs de noeud (50) sont relayés respectivement et de manière répétée de façon à être reçus par l'ensemble des autres dispositifs de noeud, et ainsi, un échange de données les uns avec les autres est accompli entre l'ensemble des dispositifs de noeud dans la première bande de temps de cycle de communication dans le cycle d'échange de données, et
des messages émis par les unités d'émission de message (52) des dispositifs de noeud (50) respectifs sont relayés respectivement et de manière répétée de façon à être reçus par l'ensemble des autres dispositifs de noeud, et ainsi, tous les messages sont reçus par leurs dispositifs de noeud de destination dans la seconde bande de temps de cycle de communication dans le cycle d'échange de données.

**12.** Dispositif de noeud (50) dans un système de réseau de commande dans lequel une pluralité de dispositifs de noeud (50) échangent des données les uns avec les autres, le dispositif de noeud comprenant :

une unité d'émission-réception de données (51) configurée pour émettre des données de son dispositif et pour recevoir/relayer des données d'émission d'un dispositif différent pendant un cycle d'échange de données prescrit et dans sa première bande de temps de cycle de communication ; **caractérisé par**
une unité d'émission de message (52) configurée pour, lorsqu'il existe une requête d'émission de message de son dispositif, émettre un nombre de messages correspondants à une station adjacente à une temporisation prescrite dans une seconde bande de temps de cycle de communication, qui est ultérieure à la première bande de temps de cycle de communication, pendant chacun des cycles d'échange de données prescrits, le nombre étant égal ou inférieur à un nombre d'autorisations d'émission de message affecté à son dispositif ; et
une unité de réception de message (53) configurée pour, lors de la réception d'un message à partir de l'une des stations adjacentes, relayer le message à l'autre station adjacente ou pour, lorsque le message est adressé à son dispositif, obtenir le message, dans la seconde bande de temps de cycle de communication.

**13.** Dispositif de noeud selon la revendication 12, dans lequel
une temporisation prescrite dans la seconde bande de temps de cycle de communication correspond au moment où la seconde bande de temps de cycle de communication démarre.

**14.** Dispositif de noeud selon la revendication 13, dans lequel

une temporisation prescrite dans la seconde bande de temps de cycle de communication est identique pour l'ensemble des dispositifs de noeud.

15. Dispositif de noeud selon l'une des revendications 12 à 14, dans lequel
l'unité d'émission-réception de données (51) est configurée pour, lorsqu'il existe une requête d'émission de message de son dispositif, ajouter un nombre des requêtes aux données de son dispositif de façon à émettre les données et pour, lorsque le nombre des requêtes du dispositif différent est ajouté à des données d'émission du dispositif différent, stocker le nombre des requêtes,
une unité de détermination de nombre d'autorisations d'émission de message (54) configurée pour déterminer un nombre d'autorisations d'émission de message de chaque dispositif de noeud sur la base du nombre stocké des requêtes et d'une valeur prescrite qui est définie à l'avance, et ainsi pour déterminer un nombre d'autorisations d'émission de message de son dispositif, est en outre incluse, et
l'unité d'émission de message (52) est configurée pour, lorsqu'il existe une requête d'émission de message de son dispositif, émettre autant de messages que le spécifie le nombre des autorisations d'émission de message de son dispositif.

16. Dispositif de noeud selon la revendication 15, dans lequel
l'unité de détermination de nombre d'autorisations d'émission de message (54) est configurée pour déterminer un nombre des autorisations d'émission de message de chacun des dispositifs de noeud sur la base du nombre stocké des requêtes, de la valeur prescrite qui est définie à l'avance et d'un ordre de priorité courant de chacun des dispositifs de noeud.

17. Dispositif de noeud selon la revendication 15, dans lequel
la valeur prescrite est une valeur de limite supérieure qui est un nombre de messages qui peuvent être émis par le système entier dans la seconde bande de temps de cycle de communication, et
l'unité de détermination de nombre d'autorisations d'émission de message (54) est configurée pour déterminer le nombre des autorisations d'émission de message sur la base du nombre stocké des requêtes et de la valeur de limite supérieure d'une manière telle qu'un total des nombres des autorisations d'émission de message pour l'ensemble des dispositifs de noeud ne dépasse pas la valeur de limite supérieure.

18. Dispositif de noeud selon la revendication 16, dans lequel
la valeur prescrite est une valeur de limite supérieure qui est un nombre de messages qui peuvent être émis par le système entier dans la seconde bande de temps de cycle de communication, et
l'unité de détermination de nombre d'autorisations d'émission de message (54) est configurée pour déterminer le nombre des autorisations d'émission de message en réalisant une affectation de manière préférentielle à un dispositif de noeud dont l'ordre de priorité est élevé tout en gardant un total des nombres des autorisations d'émission de message pour l'ensemble des dispositifs de noeud au-dessous de la valeur de limite supérieure sur la base du nombre stocké des requêtes et de la valeur de limite supérieure.

F I G. 1

Send

Rcv

RECEIVE REQUEST — S11

TRANSMIT TO BOTH OF SYSTEMS A AND B — S12

( a )

S21 — FRAME DETERMINATION OTHER STATIONS?

NO → DISCARD — S23 → END

YES — S22 → RELAY

S24 — ALREADY RECEIVED IDENTICAL FRAME?

YES → DISCARD — S26

NO — S25 → GIVE IT TO PROCESS UNIT

END

( b )

F I G.  2

PROCESS OF PROCESS UNIT

S31 WAIT FOR EVENT

S32 EVENT OCCURRED? — NO / YES

S33 EVENT DETERMINATION

S34 EXPIRATION OF CYCLE? — YES / NO

S35 SET SEND TIMER FOR COMMON MEMORY

S36 DETERMINATION OF PRESENCE OR ABSENCE OF TRANSMISSION REQUEST OF STATION ITSELF — YES / NO

S37 SET AND ENTRY OF MESSAGE TRANSMISSION REQUEST

S38 ACTIVATE SEND TIMER

S39 EXPIRATION OF SEND TIMER FOR COMMON MEMORY? — YES / NO

S40 TRANSMIT COMMON MEMORY FRAME

S41 SET SEND TIMER FOR MESSAGE

S42 ACTIVATE SEND TIMER

S43 EXPIRATION OF SEND TIMER FOR MESSAGE? — YES / NO

S44 COMMON MEMORY FRAME OMISSION DETERMINATION AND MESSAGE TRANSMISSION-PERMITTED STATION DETERMINATION

FIX NUMBER OF PERMISSIONS OF MESSAGE TRANSMISSION

S45 DETERMINATION OF WHETHER OR NOT MESSAGE CAN BE TRANSMITTED

S46 IS IT THAT MESSAGE TRANSMISSION REQUEST EXISTS AND MESSAGE TRANSMISSION RIGHT EXISTS? — YES / NO

S47 TRANSMIT MESSAGE FRAME

S48 COMMON MEMORY FRAME RECEIVED? — NO / YES

S49 COMMON MEMORY RECEPTION PROCESS

S50 OTHER STATION MESSAGE TRANSMIT REQUEST ENTRY

F I G. 3

START

S61

IS THERE FRAME OMISSION?

YES

NO

S62

RECOGNIZE NUMBER OF REQUESTS, PRIORITY ORDER AND UPPER LIMIT VALUE OF EACH STATION

S64

NUMBER OF MESSAGE TRANSMISSION OF ITSELF IS "1"

S63

DETERMINE NUMBER OF PERMISSIONS OF MESSAGE TRANSMISSION OF EACH STATION AND DETERMINE NUMBER OF PERMISSIONS OF MESSAGE TRANSMISSION OF ITSELF

END

F I G. 4

```
                                    ┌─ S71
        ┌──────────────────────────┐
        │  ASSIGN  "1"   EACH  TO   │
        │  ALL  STATIONS  THAT      │
        │  MADE  REQUESTS           │
        └──────────────────────────┘
                                    ┌─ S72
        ┌──────────────────────────┐
        │  DISTRIBUTE  SURPLUS      │
        │  PORTIONS  TO  STATIONS  IN│
        │  ACCORDANCE  WITH  PRIORITY│
        │  ORDERS                   │
        └──────────────────────────┘
```

F I G. 5

SCAN TIME (COMMUNICATION CYCLE)

SYNCHRONIZATION TC

TS
COMMON MEMORY TRANSPORT BAND

MSG
MESSAGE TRANSPORT BAND

F I G. 6

EP 3 328 003 B1

RECEPTION

STATION 1 (SLAVE) MSG TRANSMISSION NUMBER OF REQUESTS = 3

TRANSMISSIO

| STATION 4 | STATION 3 + MSG TRANSMISSION REQUEST | STATION 3 | STATION 2 + MSG TRANSMISSION REQUEST | STATION 2 | STATION 2 | STATION 1 + MSG TRANSMISSION REQUEST | STATION 3 MSG | STATION 3 MSG | STATION 2 MSG | STATION 1 MSG | STATION 1 MSG | STATION 1 MSG |

| STATION 1 + MSG TRANSMISSION REQUEST | STATION 4 | STATION 3 + MSG TRANSMISSION REQUEST | STATION 3 | STATION 2 + MSG TRANSMISSION REQUEST | STATION 2 | STATION 2 | STATION 1 MSG | STATION 1 MSG | STATION 1 MSG | STATION 3 MSG | STATION 3 MSG | STATION 2 MSG |

RECEPTION

STATION 2 (MASTER) MSG TRANSMISSION NUMBER OF REQUESTS = 1

TRANSMISSIO

| STATION 1 + MSG TRANSMISSION REQUEST | STATION 4 | STATION 3 + MSG TRANSMISSION REQUEST | STATION 3 | STATION 2 + MSG TRANSMISSION REQUEST | STATION 2 | STATION 2 | STATION 1 MSG | STATION 1 MSG | STATION 1 MSG | STATION 3 MSG | STATION 3 MSG | STATION 2 MSG |

| STATION 2 + MSG TRANSMISSION REQUEST | STATION 2 | STATION 2 | STATION 1 + MSG TRANSMISSION REQUEST | STATION 4 | STATION 3 + MSG TRANSMISSION REQUEST | STATION 3 | STATION 2 MSG | STATION 1 MSG | STATION 1 MSG | STATION 3 MSG | STATION 3 MSG | STATION 3 MSG |

RECEPTION

STATION 3 (SLAVE) MSG TRANSMISSION NUMBER OF REQUESTS = 4

TRANSMISSIO

| STATION 2 + MSG TRANSMISSION REQUEST | STATION 2 | STATION 2 | STATION 1 + MSG TRANSMISSION REQUEST | STATION 4 | STATION 3 + MSG TRANSMISSION REQUEST | STATION 3 | STATION 2 MSG | STATION 1 MSG | STATION 1 MSG | STATION 3 MSG | STATION 3 MSG | STATION 3 MSG |

| STATION 3 + MSG TRANSMISSION REQUEST | STATION 4 | STATION 2 + MSG TRANSMISSION REQUEST | STATION 2 | STATION 2 | STATION 1 + MSG TRANSMISSION REQUEST | STATION 4 | STATION 3 MSG | STATION 3 MSG | STATION 2 MSG | STATION 1 MSG | STATION 1 MSG | STATION 1 MSG |

RECEPTION

STATION 4 (SLAVE) MSG TRANSMISSION NUMBER OF REQUESTS = 0

TRANSMISSIO

| STATION 3 + MSG TRANSMISSION REQUEST | STATION 3 | STATION 2 + MSG TRANSMISSION REQUEST | STATION 2 | STATION 2 | STATION 1 + MSG TRANSMISSION REQUEST | STATION 4 | STATION 3 MSG | STATION 3 MSG | STATION 2 MSG | STATION 1 MSG | STATION 1 MSG | STATION 1 MSG |

| STATION 4 | STATION 3 + MSG TRANSMISSION REQUEST | STATION 3 | STATION 2 + MSG TRANSMISSION REQUEST | STATION 2 | STATION 2 | STATION 1 + MSG TRANSMISSION REQUEST | STATION 4 MSG | STATION 3 MSG | STATION 3 MSG | STATION 2 MSG | STATION 1 MSG | STATION 1 MSG | STATION 1 MSG |

F I G. 7

F I G. 8

F I G. 9

38

F I G. 1 0

FIG. 11

FIG. 12

F I G .  1 3

F I G. 1 4

CIRCUIT A

CIRCUIT B

STATION 1

STATION 2

STATION 3

STATION 4

F I G. 1 5

F I G. 1 6

45

FIG. 17

**EP 3 328 003 B1**

**REFERENCES CITED IN THE DESCRIPTION**

**Patent documents cited in the description**

- JP 2005159754 A
- WO 2013121568 A
- JP 2016005247 A
- US 2013128895 A1